# EUROPEAN PATENT APPLICATION

(11) **EP 3 318 970 A1**
(43) Date of publication of application: **09.05.2018**
(21) Application number: 17170867.0
(22) Date of filing: 12.05.2017
(51) Int. Cl.: G06F 3/147

(54) **DISPLAY APPARATUS**

(30) Priority: 02.11.2016 KR 20160145413
(71) Applicant: LG Electronics Inc., Seoul 07336 (KR)
(72) Inventor: LEE, Hyunok, 06772 SEOUL (KR); SHIM, Hongjo, 06772 SEOUL (KR); KIM, Hoyoung, 06772 SEOUL (KR); PARK, Mihyun, 06772 SEOUL (KR); SIN, Mansoo, 06772 SEOUL (KR)
(74) Representative: Cabinet Plasseraud

(57) **Abstract**

A display apparatus includes: a display unit configured to display an image; and a control unit configured to acquire information on a size of a display region of a specific object included in an omnidirectional image and display a first image in the display region based on the size of the display region if the omnidirectional image is displayed. Information included in the first image is changed based on at least one of the size of the display region and a display mode of the omnidirectional image.

## Description

### BACKGROUND

The present disclosure relates to a display apparatus for inserting other images replacing a hand part based on a size of a hand included in an omnidirectional image.

Terminals may be generally classified as mobile/portable terminals or stationary terminals according to their mobility. Mobile terminals may also be classified as handheld terminals or vehicle mounted terminals according to whether or not a user can directly carry the terminal.

On the other hand, technologies capable of omnidirectionally capturing an image by using an omnidirectional camera and providing the omnidirectionally captured image to a user have been recently introduced. A representative example is a capturing device called a 360-degree camera, a mobile terminal that displays an image captured by the 360-degree camera, or the like.

Meanwhile, when an omnidirectional image is captured by using an omnidirectional capturing device, an image of a hand or a fixing device holding the omnidirectional camera may be captured together with the omnidirectional image.

Furthermore, due to characteristics of a wide angle lens or a fisheye lens greatly displaying a nearby object by highlighting the nearby object, when the omnidirectional image is displayed, the hand or the fixing device may be highlighted to be greatly displayed. Accordingly, the hand or the fixing device may be a factor that interrupts appreciation of the omnidirectional image.

### SUMMARY

Embodiments provide a display apparatus for inserting other images replacing a hand part based on a size of a hand included in an omnidirectional image.

In one embodiment, a display apparatus includes: a display unit configured to display an image; and a control unit 180 configured to acquire information on a size of a display region of a specific object included in an omnidirectional image and display a first image in the display region based on the size of the display region if the omnidirectional image is displayed, wherein information included in the first image is changed based on at least one of the size of the display region and a display mode of the omnidirectional image.

Further scope of applicability of the present invention will become apparent from the detailed description given hereinafter. However, it should be understood that the detailed description and specific examples, while indicating preferred embodiments of the invention, are given by illustration only, since various changes and modifications within the spirit and scope of the invention will become apparent to those skilled in the art from this detailed description.

### BRIEF DESCRIPTION OF THE DRAWINGS

The present invention will become more fully understood from the detailed description given herein below and the accompanying drawings, which are given by illustration only, and thus are not limitative of the present invention, and wherein:
FIG. 1A is a block diagram of a mobile terminal in accordance with the present disclosure;
FIGS. 1B and 1C are conceptual views of one example of the mobile terminal, viewed from different directions;
FIGS. 2 to 4 are diagrams illustrating issues related to the present disclosure;
FIG. 5 is a diagram illustrating an operating method of a display apparatus, according to an embodiment of the present disclosure;
FIGS. 6 and 7 are diagrams illustrating a method of acquiring information on a display region of a specific object, according to an embodiment of the present disclosure;
FIGS. 8 to 11 are diagrams illustrating a method of determining whether to display a first image based on a ratio of a display region, according to an embodiment of the present disclosure;
FIGS. 12 to 14 are illustrating a case where the same preset ratio is applied regardless of a display mode, according to an embodiment of the present disclosure;
FIGS. 15 and 16 are diagrams illustrating information included in a first image changed according to a display mode;
FIGS. 17 and 18 are diagrams illustrating information included in a first image changed according to a display mode, according to another embodiment of the present disclosure;
FIGS. 19 and 20 are diagrams illustrating information included in a first image changed according to a size of a display region, according to an embodiment of the present disclosure;
FIG. 21 is a diagram illustrating a method of linking a first image and an application, according to an embodiment of the present disclosure;
FIGS. 22 and 23 are diagrams illustrating a first image changed according to a size of a display region, according to an embodiment of the present disclosure;
FIGS. 24 and 25 are diagrams illustrating a method of sharing an omnidirectional image, according to an exemplary embodiment of the present disclosure;
FIGS. 26 and 27 are diagrams illustrating the number of pieces of information included in a first image changed according to a size of a display region, according to an embodiment of the present disclosure;
FIG. 28 is a diagram illustrating a size of information included in a first image changed according to a size of a display region, according to an embodiment of the present disclosure;
FIGS. 29 and 30 are diagrams illustrating a method of transmitting an omnidirectional image together with information included in a first image, according to an embodiment of the present disclosure;
FIGS. 31 to 33 are diagrams illustrating a method of changing information included in a first image, according to an embodiment of the present disclosure;
FIGS. 34 to 36 are diagrams illustrating a variety of information displayed in an omnidirectional display mode, according to an embodiment of the present disclosure;
FIGS. 37 to 39 are diagrams illustrating a method of deleting a display region of a specific object and displaying an image of a remaining region, according to an embodiment of the present disclosure;
FIGS. 40 to 45 are diagrams illustrating a method of minimizing or eliminating a display region of a specific object, according to an embodiment of the present disclosure;
FIG. 46 is a diagram illustrating a mobile terminal interworking with an omnidirectional capturing device, according to an exemplary embodiment of the present disclosure;
FIGS. 47 to 50 are diagrams illustrating a method of displaying an omnidirectional image and a normal image together, according to an embodiment of the present disclosure;
FIG. 51 is a diagram illustrating a method of capturing an omnidirectional image and a normal image together, according to an embodiment of the present disclosure;
FIGS. 52A and 52B are diagrams illustrating a captured omnidirectional image and a captured normal image according to an exemplary embodiment of the present disclosure;
FIG. 53 is a diagram illustrating an image displayed when an omnidirectional image is enlarged, according to an embodiment of the present disclosure;
FIGS. 54 to 56 are diagrams illustrating a method of displaying an omnidirectional image and a normal image together, according to an embodiment of the present disclosure;
FIGS. 57 and 58 are diagrams illustrating a method of displaying a preview image of an omnidirectional display mode and a preview image of a normal display mode at the same time, according to an embodiment of the present disclosure;
FIGS. 59 to 61 are diagrams illustrating a method of outputting a warning when there are many specific images, according to an embodiment of the present disclosure; and

### DETAILED DESCRIPTION OF THE EMBODIMENTS

Description will now be given in detail according to exemplary embodiments disclosed herein, with reference to the accompanying drawings. For the sake of brief description with reference to the drawings, the same or equivalent components may be provided with the same reference numbers, and description thereof will not be repeated. In general, a suffix such as "module" and "unit" may be used to refer to elements or components. Use of such a suffix herein is merely intended to facilitate description of the specification, and the suffix itself is not intended to give any special meaning or function. In the present disclosure, that which is well-known to one of ordinary skill in the relevant art has generally been omitted for the sake of brevity. The accompanying drawings are used to help easily understand various technical features and it should be understood that the embodiments presented herein are not limited by the accompanying drawings. As such, the present disclosure should be construed to extend to any alterations, equivalents and substitutes in addition to those which are particularly set out in the accompanying drawings.

It will be understood that although the terms first, second, etc. may be used herein to describe various elements, these elements should not be limited by these terms. These terms are generally only used to distinguish one element from another.

It will be understood that when an element is referred to as being "connected with" another element, the element can be connected with the other element or intervening elements may also be present. In contrast, when an element is referred to as being "directly connected with" another element, there are no intervening elements present.

A singular representation may include a plural representation unless it represents a definitely different meaning from the context. Terms such as "include" or "has" are used herein and should be understood that they are intended to indicate an existence of several components, functions or steps, disclosed in the specification, and it is also understood that greater or fewer components, functions, or steps may likewise be utilized.

Mobile terminals presented herein may be implemented using a variety of different types of terminals. Examples of such terminals include cellular phones, smart phones, user equipment, laptop computers, digital broadcast terminals, personal digital assistants (PDAs), portable multimedia players (PMPs), navigators, portable computers (PCs), slate PCs, tablet PCs, ultra books, wearable devices (for example, smart watches, smart glasses, head mounted displays (HMDs)), and the like.

By way of non-limiting example only, further description will be made with reference to particular types of mobile terminals. However, such teachings apply equally to other types of terminals, such as those types noted above. In addition, these teachings may also be applied to stationary terminals such as digital TV, desktop computers, and the like.

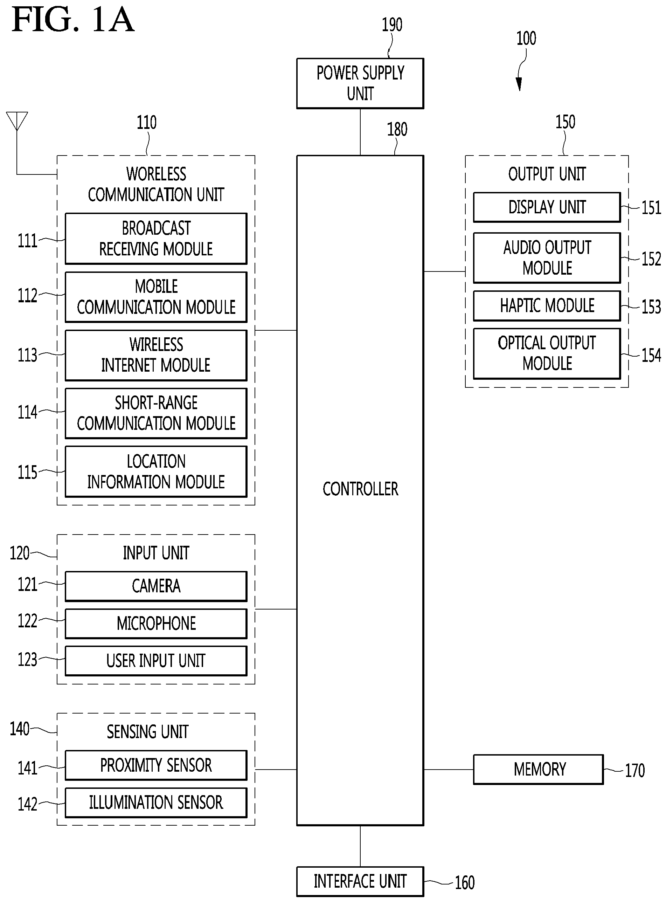

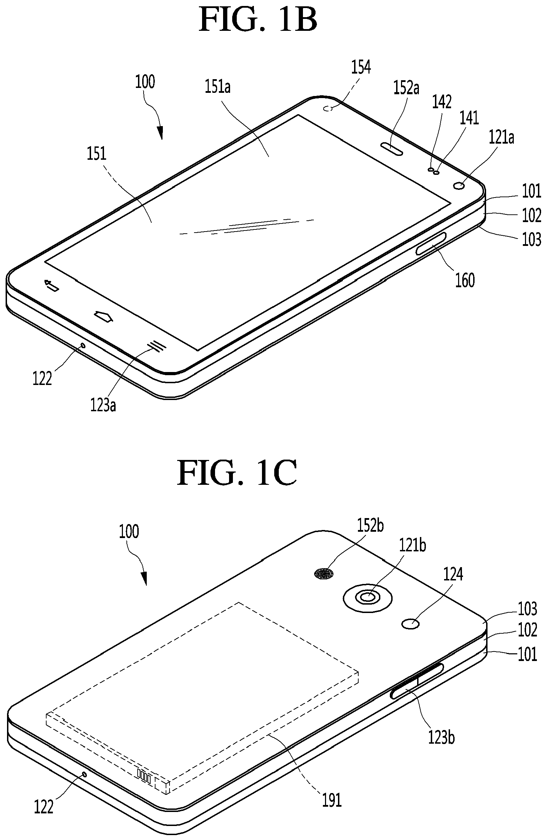

Reference is now made to FIGS. 1A to 1C, where FIG. 1A is a block diagram of a mobile terminal in accordance with the present disclosure, and FIGS. 1B and 1C are conceptual views of one example of the mobile terminal, viewed from different directions.

The mobile terminal 100 is shown having components such as a wireless communication unit 110, an input unit 120, a sensing unit 140, an output unit 150, an interface unit 160, a memory 170, a control unit 180, and a power supply unit 190. It is understood that implementing all of the illustrated components is not a requirement, and that greater or fewer components may alternatively be implemented.

Referring now to FIG. 1A, the mobile terminal 100 is shown having wireless communication unit 110 configured with several commonly implemented components. For instance, the wireless communication unit 110 typically includes one or more components which permit wireless communication between the mobile terminal 100 and a wireless communication system or network within which the mobile terminal is located.

The wireless communication unit 110 typically includes one or more modules which permit communications such as wireless communications between the mobile terminal 100 and a wireless communication system, communications between the mobile terminal 100 and another mobile terminal, communications between the mobile terminal 100 and an external server. Further, the wireless communication unit 110 typically includes one or more modules which connect the mobile terminal 100 to one or more networks. To facilitate such communications, the wireless communication unit 110 includes one or more of a broadcast receiving module 111, a mobile communication module 112, a wireless Internet module 113, a short-range communication module 114, and a location information module 115.

The input unit 120 includes a camera 121 for obtaining images or video, a microphone 122, which is one type of audio input device for inputting an audio signal, and a user input unit 123 (for example, a touch key, a push key, a mechanical key, a soft key, and the like) for allowing a user to input information. Data (for example, audio, video, image, and the like) is obtained by the input unit 120 and may be analyzed and processed by control unit 180 according to device parameters, user commands, and combinations thereof.

The sensing unit 140 is typically implemented using one or more sensors configured to sense internal information of the mobile terminal, the surrounding environment of the mobile terminal, user information, and the like. For example, in FIG. 1A, the sensing unit 140 is shown having a proximity sensor 141 and an illumination sensor 142.

If desired, the sensing unit 140 may alternatively or additionally include other types of sensors or devices, such as a touch sensor, an acceleration sensor, a magnetic sensor, a G-sensor, a gyroscope sensor, a motion sensor, an RGB sensor, an infrared (IR) sensor, a finger scan sensor, a ultrasonic sensor, an optical sensor (for example, camera 121), a microphone 122, a battery gauge, an environment sensor (for example, a barometer, a hygrometer, a thermometer, a radiation detection sensor, a thermal sensor, and a gas sensor, among others), and a chemical sensor (for example, an electronic nose, a health care sensor, a biometric sensor, and the like), to name a few. The mobile terminal 100 may be configured to utilize information obtained from sensing unit 140, and in particular, information obtained from one or more sensors of the sensing unit 140, and combinations thereof.

The output unit 150 is typically configured to output various types of information, such as audio, video, tactile output, and the like. The output unit 150 is shown having a display unit 151, an audio output module 152, a haptic module 153, and an optical output module 154.

The display unit 151 may have an inter-layered structure or an integrated structure with a touch sensor in order to facilitate a touch screen. The touch screen may provide an output interface between the mobile terminal 100 and a user, as well as function as the user input unit 123 which provides an input interface between the mobile terminal 100 and the user.

The interface unit 160 serves as an interface with various types of external devices that can be coupled to the mobile terminal 100. The interface unit 160, for example, may include any of wired or wireless ports, external power supply ports, wired or wireless data ports, memory card ports, ports for connecting a device having an identification module, audio input/output (I/O) ports, video I/O ports, earphone ports, and the like. In some cases, the mobile terminal 100 may perform assorted control functions associated with a connected external device, in response to the external device being connected to the interface unit 160.

The memory 170 is typically implemented to store data to support various functions or features of the mobile terminal 100. For instance, the memory 170 may be configured to store application programs executed in the mobile terminal 100, data or instructions for operations of the mobile terminal 100, and the like. Some of these application programs may be downloaded from an external server via wireless communication. Other application programs may be installed within the mobile terminal 100 at time of manufacturing or shipping, which is typically the case for basic functions of the mobile terminal 100 (for example, receiving a call, placing a call, receiving a message, sensing a message, and the like). It is common for application programs to be stored in the memory 170, installed in the mobile terminal 100, and executed by the control unit 180 to perform an operation (or function) for the mobile terminal 100.

The control unit 180 typically functions to control overall operation of the mobile terminal 100, in addition to the operations associated with the application programs. The control unit 180 may provide or process information or functions appropriate for a user by processing signals, data, information and the like, which are input or output by the various components depicted in FIG. 1A, or activating application programs stored in the memory 170. As one example, the control unit 180 controls some or all of the components illustrated in FIGS. 1A to 1C according to the execution of an application program that have been stored in the memory 170.

The power supply unit 190 can be configured to receive external power or provide internal power in order to supply appropriate power required for operating elements and components included in the mobile terminal 100. The power supply unit 190 may include a battery, and the battery may be configured to be embedded in the terminal body, or configured to be detachable from the terminal body.

Referring still to FIG. 1A, various components depicted in this figure will now be described in more detail. Regarding the wireless communication unit 110, the broadcast receiving module 111 is typically configured to receive a broadcast signal and/or broadcast associated information from an external broadcast managing entity via a broadcast channel. The broadcast channel may include a satellite channel, a terrestrial channel, or both. In some embodiments, two or more broadcast receiving modules 111 may be utilized to facilitate simultaneously receiving of two or more broadcast channels, or to support switching among broadcast channels.

The broadcast managing entity may be a server which generates and transmits a broadcast signal and/or broadcast associated information, or a server which receives a pre-generated broadcast signal and/or broadcast associated information, and sends such items to the mobile terminal.

The broadcast signal may be implemented using any of a TV broadcast signal, a radio broadcast signal, a data broadcast signal, and combinations thereof, among others. The broadcast signal in some cases may further include a data broadcast signal combined with a TV or radio broadcast signal.

The broadcast signal may be encoded according to any of a variety of technical standards or broadcasting methods (for example, International Organization for Standardization (ISO), International Electrotechnical Commission (IEC), Digital Video Broadcast (DVB), Advanced Television Systems Committee (ATSC), and the like) for transmission and reception of digital broadcast signals. The broadcast receiving module 111 can receive the digital broadcast signals using a method appropriate for the transmission method utilized.

Examples of broadcast associated information may include information associated with a broadcast channel, a broadcast program, a broadcast event, a broadcast service provider, or the like. The broadcast associated information may also be provided via a mobile communication network, and in this case, received by the mobile communication module 112.

The broadcast associated information may be implemented in various formats. For instance, broadcast associated information may include an Electronic Program Guide (EPG) of Digital Multimedia Broadcasting (DMB), an Electronic Service Guide (ESG) of Digital Video Broadcast-Handheld (DVB-H), and the like. Broadcast signals and/or broadcast associated information received via the broadcast receiving module 111 may be stored in a suitable device, such as a memory 170.

The mobile communication module 112 can transmit and/or receive wireless signals to and from one or more network entities. Typical examples of a network entity include a base station, an external mobile terminal, a server, and the like. Such network entities form part of a mobile communication network, which is constructed according to technical standards or communication methods for mobile communications (for example, Global System for Mobile Communication (GSM), Code Division Multi Access (CDMA), CDMA2000 (Code Division Multi Access 2000), EV-DO(Enhanced Voice-Data Optimized or Enhanced Voice-Data Only), Wideband CDMA (WCDMA), High Speed Downlink Packet access (HSDPA), HSUPA(High Speed Uplink Packet Access), Long Term Evolution (LTE), LTE-A(Long Term Evolution-Advanced), and the like). Examples of wireless signals transmitted and/or received via the mobile communication module 112 include audio call signals, video (telephony) call signals, or various formats of data to support communication of text and multimedia messages.

The wireless Internet module 113 is configured to facilitate wireless Internet access. This module may be internally or externally coupled to the mobile terminal 100. The wireless Internet module 113 may transmit and/or receive wireless signals via communication networks according to wireless Internet technologies.

Examples of such wireless Internet access include Wireless LAN (WLAN), Wireless Fidelity (Wi-Fi), Wi-Fi Direct, Digital Living Network Alliance (DLNA), Wireless Broadband (WiBro), Worldwide Interoperability for Microwave Access (WiMAX), High Speed Downlink Packet Access (HSDPA), HSUPA(High Speed Uplink Packet Access), Long Term Evolution (LTE), LTE-A(Long Term Evolution-Advanced), and the like. The wireless Internet module 113 may transmit/receive data according to one or more of such wireless Internet technologies, and other Internet technologies as well.

In some embodiments, when the wireless Internet access is implemented according to, for example, WiBro, HSDPA, HSUPA, GSM, CDMA, WCDMA, LTE, LTE-A and the like, as part of a mobile communication network, the wireless Internet module 113 performs such wireless Internet access. As such, the wireless Internet module 113 may cooperate with, or function as, the mobile communication module 112.

The short-range communication module 114 is configured to facilitate short-range communications. Suitable technologies for implementing such short-range communications include BLUETOOTH™, Radio Frequency IDentification (RFID), Infrared Data Association (IrDA), Ultra-WideBand (UWB), ZigBee, Near Field Communication (NFC), Wireless-Fidelity (Wi-Fi), Wi-Fi Direct, Wireless USB(Wireless Universal Serial Bus), and the like. The short-range communication module 114 in general supports wireless communications between the mobile terminal 100 and a wireless communication system, communications between the mobile terminal 100 and another mobile terminal 100, or communications between the mobile terminal and a network where another mobile terminal 100 (or an external server) is located, via wireless area networks. One example of the wireless area networks is a wireless personal area networks.

In some embodiments, another mobile terminal (which may be configured similarly to mobile terminal 100) may be a wearable device, for example, a smart watch, a smart glass or a head mounted display (HMD), which is able to exchange data with the mobile terminal 100 (or otherwise cooperate with the mobile terminal 100). The short-range communication module 114 may sense or recognize the wearable device, and permit communication between the wearable device and the mobile terminal 100. In addition, when the sensed wearable device is a device which is authenticated to communicate with the mobile terminal 100, the control unit 180, for example, may cause transmission of data processed in the mobile terminal 100 to the wearable device via the short-range communication module 114. Hence, a user of the wearable device may use the data processed in the mobile terminal 100 on the wearable device. For example, when a call is received in the mobile terminal 100, the user may answer the call using the wearable device. Also, when a message is received in the mobile terminal 100, the user can check the received message using the wearable device.

The location information module 115 is generally configured to detect, calculate, derive or otherwise identify a position of the mobile terminal. As an example, the location information module 115 includes a Global Position System (GPS) module, a Wi-Fi module, or both. If desired, the location information module 115 may alternatively or additionally function with any of the other modules of the wireless communication unit 110 to obtain data related to the position of the mobile terminal.

As one example, when the mobile terminal uses a GPS module, a position of the mobile terminal may be acquired using a signal sent from a GPS satellite. As another example, when the mobile terminal uses the Wi-Fi module, a position of the mobile terminal can be acquired based on information related to a wireless access point (AP) which transmits or receives a wireless signal to or from the Wi-Fi module.

The input unit 120 may be configured to permit various types of input to the mobile terminal 100. Examples of such input include audio, image, video, data, and user input. Image and video input is often obtained using one or more cameras 121. Such cameras 121 may process image frames of still pictures or video obtained by image sensors in a video or image capture mode. The processed image frames can be displayed on the display unit 151 or stored in memory 170. In some cases, the cameras 121 may be arranged in a matrix configuration to permit a plurality of images having various angles or focal points to be input to the mobile terminal 100. As another example, the cameras 121 may be located in a stereoscopic arrangement to acquire left and right images for implementing a stereoscopic image.

The microphone 122 is generally implemented to permit audio input to the mobile terminal 100. The audio input can be processed in various manners according to a function being executed in the mobile terminal 100. If desired, the microphone 122 may include assorted noise removing algorithms to remove unwanted noise generated in the course of receiving the external audio.

The user input unit 123 is a component that permits input by a user. Such user input may enable the control unit 180 to control operation of the mobile terminal 100. The user input unit 123 may include one or more of a mechanical input element (for example, a key, a button located on a front and/or rear surface or a side surface of the mobile terminal 100, a dome switch, a jog wheel, a jog switch, and the like), or a touch-sensitive input, among others. As one example, the touch-sensitive input may be a virtual key or a soft key, which is displayed on a touch screen through software processing, or a touch key which is located on the mobile terminal at a location that is other than the touch screen. On the other hand, the virtual key or the visual key may be displayed on the touch screen in various shapes, for example, graphic, text, icon, video, or a combination thereof.

The sensing unit 140 is generally configured to sense one or more of internal information of the mobile terminal, surrounding environment information of the mobile terminal, user information, or the like. The control unit 180 generally cooperates with the sensing unit 140 to control operation of the mobile terminal 100 or execute data processing, a function or an operation associated with an application program installed in the mobile terminal based on the sensing provided by the sensing unit 140. The sensing unit 140 may be implemented using any of a variety of sensors, some of which will now be described in more detail.

The proximity sensor 141 may include a sensor to sense presence or absence of an object approaching a surface, or an object located near a surface, by using an electromagnetic field, infrared rays, or the like without a mechanical contact. The proximity sensor 141 may be arranged at an inner region of the mobile terminal covered by the touch screen, or near the touch screen.

The proximity sensor 141, for example, may include any of a transmissive type photoelectric sensor, a direct reflective type photoelectric sensor, a mirror reflective type photoelectric sensor, a high-frequency oscillation proximity sensor, a capacitance type proximity sensor, a magnetic type proximity sensor, an infrared rays proximity sensor, and the like. When the touch screen is implemented as a capacitance type, the proximity sensor 141 can sense proximity of a pointer relative to the touch screen by changes of an electromagnetic field, which is responsive to an approach of an object with conductivity. In this case, the touch screen (touch sensor) may also be categorized as a proximity sensor.

The term "proximity touch" will often be referred to herein to denote the scenario in which a pointer is positioned to be proximate to the touch screen without contacting the touch screen. The term "contact touch" will often be referred to herein to denote the scenario in which a pointer makes physical contact with the touch screen. For the position corresponding to the proximity touch of the pointer relative to the touch screen, such position will correspond to a position where the pointer is perpendicular to the touch screen. The proximity sensor 141 may sense proximity touch, and proximity touch patterns (for example, distance, direction, speed, time, position, moving status, and the like).

In general, the control unit 180 processes data corresponding to proximity touches and proximity touch patterns sensed by the proximity sensor 141, and cause output of visual information on the touch screen. In addition, the control unit 180 can control the mobile terminal 100 to execute different operations or process different data according to whether a touch with respect to a point on the touch screen is either a proximity touch or a contact touch.

A touch sensor can sense a touch applied to the touch screen, such as display unit 151, using any of a variety of touch methods. Examples of such touch methods include a resistive type, a capacitive type, an infrared type, and a magnetic field type, among others.

As one example, the touch sensor may be configured to convert changes of pressure applied to a specific part of the display unit 151, or convert capacitance occurring at a specific part of the display unit 151, into electric input signals. The touch sensor may also be configured to sense not only a touched position and a touched area, but also touch pressure and/or touch capacitance. A touch object is generally used to apply a touch input to the touch sensor. Examples of typical touch objects include a finger, a touch pen, a stylus pen, a pointer, or the like.

When a touch input is sensed by a touch sensor, corresponding signals may be transmitted to a touch controller. The touch controller may process the received signals, and then transmit corresponding data to the control unit 180. Accordingly, the control unit 180 may sense which region of the display unit 151 has been touched. Here, the touch controller may be a component separate from the control unit 180, the control unit 180, and combinations thereof.

In some embodiments, the control unit 180 may execute the same or different controls according to a type of touch object that touches the touch screen or a touch key provided in addition to the touch screen. Whether to execute the same or different control according to the object which provides a touch input may be decided based on a current operating state of the mobile terminal 100 or a currently executed application program, for example.

The touch sensor and the proximity sensor may be implemented individually, or in combination, to sense various types of touches. Such touches includes a short (or tap) touch, a long touch, a multi-touch, a drag touch, a flick touch, a pinch-in touch, a pinch-out touch, a swipe touch, a hovering touch, and the like.

If desired, an ultrasonic sensor may be implemented to recognize position information relating to a touch object using ultrasonic waves. The control unit 180, for example, may calculate a position of a wave generation source based on information sensed by an illumination sensor and a plurality of ultrasonic sensors. Since light is much faster than ultrasonic waves, the time for which the light reaches the optical sensor is much shorter than the time for which the ultrasonic wave reaches the ultrasonic sensor. The position of the wave generation source may be calculated using this fact. For instance, the position of the wave generation source may be calculated using the time difference from the time that the ultrasonic wave reaches the sensor based on the light as a reference signal.

The camera 121 typically includes at least one a camera sensor (CCD, CMOS etc.), a photo sensor (or image sensors), and a laser sensor.

Implementing the camera 121 with a laser sensor may allow detection of a touch of a physical object with respect to a 3D stereoscopic image. The photo sensor may be laminated on, or overlapped with, the display device. The photo sensor may be configured to scan movement of the physical object in proximity to the touch screen. In more detail, the photo sensor may include photo diodes and transistors at rows and columns to scan content received at the photo sensor using an electrical signal which changes according to the quantity of applied light. Namely, the photo sensor may calculate the coordinates of the physical object according to variation of light to thus obtain position information of the physical object.

The display unit 151 is generally configured to output information processed in the mobile terminal 100. For example, the display unit 151 may display execution screen information of an application program executing at the mobile terminal 100 or user interface (UI) and graphic user interface (GUI) information in response to the execution screen information.

In some embodiments, the display unit 151 may be implemented as a stereoscopic display unit for displaying stereoscopic images. A typical stereoscopic display unit may employ a stereoscopic display scheme such as a stereoscopic scheme (a glass scheme), an auto-stereoscopic scheme (glassless scheme), a projection scheme (holographic scheme), or the like.

In general, a 3D stereoscopic image may include a left image (e.g., a left eye image) and a right image (e.g., a right eye image). According to how left and right images are combined into a 3D stereoscopic image, a 3D stereoscopic imaging method can be divided into a top-down method in which left and right images are located up and down in a frame, an L-to-R (left-to-right or side by side) method in which left and right images are located left and right in a frame, a checker board method in which fragments of left and right images are located in a tile form, an interlaced method in which left and right images are alternately located by columns or rows, and a time sequential (or frame by frame) method in which left and right images are alternately displayed on a time basis.

Also, as for a 3D thumbnail image, a left image thumbnail and a right image thumbnail can be generated from a left image and a right image of an original image frame, respectively, and then combined to generate a single 3D thumbnail image. In general, the term "thumbnail" may be used to refer to a reduced image or a reduced still image. A generated left image thumbnail and right image thumbnail may be displayed with a horizontal distance difference there between by a depth corresponding to the disparity between the left image and the right image on the screen, thereby providing a stereoscopic space sense.

A left image and a right image required for implementing a 3D stereoscopic image may be displayed on the stereoscopic display unit using a stereoscopic processing unit. The stereoscopic processing unit can receive the 3D image and extract the left image and the right image, or can receive the 2D image and change it into a left image and a right image.

The audio output module 152 is generally configured to output audio data. Such audio data may be obtained from any of a number of different sources, such that the audio data may be received from the wireless communication unit 110 or may have been stored in the memory 170. The audio data may be output during modes such as a signal reception mode, a call mode, a record mode, a voice recognition mode, a broadcast reception mode, and the like. The audio output module 152 can provide audible output related to a particular function (e.g., a call signal reception sound, a message reception sound, etc.) performed by the mobile terminal 100. The audio output module 152 may also be implemented as a receiver, a speaker, a buzzer, or the like.

A haptic module 153 can be configured to generate various tactile effects that a user feels, perceive, or otherwise experience. A typical example of a tactile effect generated by the haptic module 153 is vibration. The strength, pattern and the like of the vibration generated by the haptic module 153 can be controlled by user selection or setting by the control unit. For example, the haptic module 153 may output different vibrations in a combining manner or a sequential manner.

Besides vibration, the haptic module 153 can generate various other tactile effects, including an effect by stimulation such as a pin arrangement vertically moving to contact skin, a spray force or suction force of air through a jet orifice or a suction opening, a touch to the skin, a contact of an electrode, electrostatic force, an effect by reproducing the sense of cold and warmth using an element that can absorb or generate heat, and the like.

The haptic module 153 can also be implemented to allow the user to feel a tactile effect through a muscle sensation such as the user's fingers or arm, as well as transferring the tactile effect through direct contact. Two or more haptic modules 153 may be provided according to the particular configuration of the mobile terminal 100.

An optical output module 154 can output a signal for indicating an event generation using light of a light source. Examples of events generated in the mobile terminal 100 may include message reception, call signal reception, a missed call, an alarm, a schedule notice, an email reception, information reception through an application, and the like.

A signal output by the optical output module 154 may be implemented in such a manner that the mobile terminal emits monochromatic light or light with a plurality of colors. The signal output may be terminated as the mobile terminal senses that a user has checked the generated event, for example.

The interface unit 160 serves as an interface for external devices to be connected with the mobile terminal 100. For example, the interface unit 160 can receive data transmitted from an external device, receive power to transfer to elements and components within the mobile terminal 100, or transmit internal data of the mobile terminal 100 to such external device. The interface unit 160 may include wired or wireless headset ports, external power supply ports, wired or wireless data ports, memory card ports, ports for connecting a device having an identification module, audio input/output (I/O) ports, video I/O ports, earphone ports, or the like.

The identification module may be a chip that stores various information for authenticating authority of using the mobile terminal 100 and may include a user identity module (UIM), a subscriber identity module (SIM), a universal subscriber identity module (USIM), and the like. In addition, the device having the identification module (also referred to herein as an "identifying device") may take the form of a smart card. Accordingly, the identifying device can be connected with the mobile terminal 100 via the interface unit 160.

When the mobile terminal 100 is connected with an external cradle, the interface unit 160 can serve as a passage to allow power from the cradle to be supplied to the mobile terminal 100 or may serve as a passage to allow various command signals input by the user from the cradle to be transferred to the mobile terminal there through. Various command signals or power input from the cradle may operate as signals for recognizing that the mobile terminal is properly mounted on the cradle.

The memory 170 can store programs to support operations of the control unit 180 and store input/output data (for example, phonebook, messages, still images, videos, etc.). The memory 170 may store data related to various patterns of vibrations and audio which are output in response to touch inputs on the touch screen.

The memory 170 may include one or more types of storage mediums including a Flash memory, a hard disk, a solid state disk, a silicon disk, a multimedia card micro type, a card-type memory (e.g., SD or DX memory, etc), a Random Access Memory (RAM), a Static Random Access Memory (SRAM), a Read-Only Memory (ROM), an Electrically Erasable Programmable Read-Only Memory (EEPROM), a Programmable Read-Only memory (PROM), a magnetic memory, a magnetic disk, an optical disk, and the like. The mobile terminal 100 may also be operated in relation to a network storage device that performs the storage function of the memory 170 over a network, such as the Internet.

The control unit 180 may typically control the general operations of the mobile terminal 100. For example, the control unit 180 may set or release a lock state for restricting a user from inputting a control command with respect to applications when a status of the mobile terminal meets a preset condition.

The control unit 180 can also perform the controlling and processing associated with voice calls, data communications, video calls, and the like, or perform pattern recognition processing to recognize a handwriting input or a picture drawing input performed on the touch screen as characters or images, respectively. In addition, the control unit 180 can control one or a combination of those components in order to implement various exemplary embodiments disclosed herein.

The power supply unit 190 receives external power or provides internal power and supplies the appropriate power required for operating respective elements and components included in the mobile terminal 100. The power supply unit 190 may include a battery, which is typically rechargeable or be detachably coupled to the terminal body for charging.

The power supply unit 190 may include a connection port. The connection port may be configured as one example of the interface unit 160 to which an external charger for supplying power to recharge the battery is electrically connected.

As another example, the power supply unit 190 may be configured to recharge the battery in a wireless manner without use of the connection port. In this example, the power supply unit 190 can receive power, transferred from an external wireless power transmitter, using at least one of an inductive coupling method which is based on magnetic induction or a magnetic resonance coupling method which is based on electromagnetic resonance.

Various embodiments described herein may be implemented in a computer-readable medium, a machine-readable medium, or similar medium using, for example, software, hardware, or any combination thereof.

Referring now to FIGS. 1B and 1C, the mobile terminal 100 is described with reference to a bar-type terminal body. However, the mobile terminal 100 may alternatively be implemented in any of a variety of different configurations. Examples of such configurations include watch-type, clip-type, glasses-type, or as a folder-type, flip-type, slide-type, swing-type, and swivel-type in which two and more bodies are combined with each other in a relatively movable manner, and combinations thereof. Discussion herein will often relate to a particular type of mobile terminal (for example, bar-type, watch-type, glasses-type, and the like). However, such teachings with regard to a particular type of mobile terminal will generally apply to other types of mobile terminals as well.

The mobile terminal 100 will generally include a case (for example, frame, housing, cover, and the like) forming the appearance of the terminal. In this embodiment, the case is formed using a front case 101 and a rear case 102. Various electronic components are incorporated into a space formed between the front case 101 and the rear case 102. At least one middle case may be additionally positioned between the front case 101 and the rear case 102.

The display unit 151 is shown located on the front side of the terminal body to output information. As illustrated, a window 151a of the display unit 151 may be mounted to the front case 101 to form the front surface of the terminal body together with the front case 101.

In some embodiments, electronic components may also be mounted to the rear case 102. Examples of such electronic components include a detachable battery 191, an identification module, a memory card, and the like. Rear cover 103 is shown covering the electronic components, and this cover may be detachably coupled to the rear case 102. Therefore, when the rear cover 103 is detached from the rear case 102, the electronic components mounted to the rear case 102 are externally exposed.

As illustrated, when the rear cover 103 is coupled to the rear case 102, a side surface of the rear case 102 is partially exposed. In some cases, upon the coupling, the rear case 102 may also be completely shielded by the rear cover 103. In some embodiments, the rear cover 103 may include an opening for externally exposing a camera 121b or an audio output module 152b.

The cases 101, 102, 103 may be formed by injection-molding synthetic resin or may be formed of a metal, for example, stainless steel (STS), aluminum (Al), titanium (Ti), or the like.

As an alternative to the example in which the plurality of cases form an inner space for accommodating components, the mobile terminal 100 may be configured such that one case forms the inner space. In this example, a mobile terminal 100 having a uni-body is formed in such a manner that synthetic resin or metal extends from a side surface to a rear surface.

If desired, the mobile terminal 100 may include a waterproofing unit (not shown) for preventing introduction of water into the terminal body. For example, the waterproofing unit may include a waterproofing member which is located between the window 151a and the front case 101, between the front case 101 and the rear case 102, or between the rear case 102 and the rear cover 103, to hermetically seal an inner space when those cases are coupled.

The mobile terminal includes a display unit 151, first and second audio output modules 151a/151b, a proximity sensor 141, an illumination sensor 142, an optical output module 154, first and second cameras 121a/121b, first and second manipulation units 123a/123b, a microphone 122, interface unit 160 and the like.

It will be described for the mobile terminal as shown in FIGS. 1B and 1C. The display unit 151, the first audio output module 151a, the proximity sensor 141, an illumination sensor 142, the optical output module 154, the first camera 121a and the first manipulation unit 123a are arranged in front surface of the terminal body, the second manipulation unit 123b, the microphone 122 and interface unit 160 are arranged in side surface of the terminal body, and the second audio output modules 151b and the second camera 121b are arranged in rear surface of the terminal body.

However, it is to be understood that alternative arrangements are possible and within the teachings of the instant disclosure. Some components may be omitted or rearranged. For example, the first manipulation unit 123a may be located on another surface of the terminal body, and the second audio output module 152b may be located on the side surface of the terminal body.

The display unit 151 outputs information processed in the mobile terminal 100. The display unit 151 may be implemented using one or more suitable display devices. Examples of such suitable display devices include a liquid crystal display (LCD), a thin film transistor-liquid crystal display (TFT-LCD), an organic light emitting diode (OLED), a flexible display, a 3-dimensional (3D) display, an e-ink display, and combinations thereof.

The display unit 151 may be implemented using two display devices, which can implement the same or different display technology. For instance, a plurality of the display units 151 may be arranged on one side, either spaced apart from each other, or these devices may be integrated, or these devices may be arranged on different surfaces.

The display unit 151 may also include a touch sensor which senses a touch input received at the display unit. When a touch is input to the display unit 151, the touch sensor may be configured to sense this touch and the control unit 180, for example, may generate a control command or other signal corresponding to the touch. The content which is input in the touching manner may be a text or numerical value, or a menu item which can be indicated or designated in various modes.

The touch sensor may be configured in a form of a film having a touch pattern, disposed between the window 151a and a display on a rear surface of the window 151a, or a metal wire which is patterned directly on the rear surface of the window 151a. Alternatively, the touch sensor may be integrally formed with the display. For example, the touch sensor may be disposed on a substrate of the display or within the display.

The display unit 151 may also form a touch screen together with the touch sensor. Here, the touch screen may serve as the user input unit 123 (see FIG. 1A). Therefore, the touch screen may replace at least some of the functions of the first manipulation unit 123a.

The first audio output module 152a may be implemented in the form of a speaker to output voice audio, alarm sounds, multimedia audio reproduction, and the like.

The window 151a of the display unit 151 will typically include an aperture to permit audio generated by the first audio output module 152a to pass. One alternative is to allow audio to be released along an assembly gap between the structural bodies (for example, a gap between the window 151a and the front case 101). In this case, a hole independently formed to output audio sounds may not be seen or is otherwise hidden in terms of appearance, thereby further simplifying the appearance and manufacturing of the mobile terminal 100.

The optical output module 154 can be configured to output light for indicating an event generation. Examples of such events include a message reception, a call signal reception, a missed call, an alarm, a schedule notice, an email reception, information reception through an application, and the like. When a user has checked a generated event, the control unit can control the optical output module 154 to stop the light output.

The first camera 121a can process image frames such as still or moving images obtained by the image sensor in a capture mode or a video call mode. The processed image frames can then be displayed on the display unit 151 or stored in the memory 170.

The first and second manipulation units 123a and 123b are examples of the user input unit 123, which may be manipulated by a user to provide input to the mobile terminal 100. The first and second manipulation units 123a and 123b may also be commonly referred to as a manipulating portion, and may employ any tactile method that allows the user to perform manipulation such as touch, push, scroll, or the like. The first and second manipulation units 123a and 123b may also employ any non-tactile method that allows the user to perform manipulation such as proximity touch, hovering, or the like.

FIG. 1B illustrates the first manipulation unit 123a as a touch key, but possible alternatives include a mechanical key, a push key, a touch key, and combinations thereof.

Input received at the first and second manipulation units 123a and 123b may be used in various ways. For example, the first manipulation unit 123a may be used by the user to provide an input to a menu, home key, cancel, search, or the like, and the second manipulation unit 123b may be used by the user to provide an input to control a volume level being output from the first or second audio output modules 152a or 152b, to switch to a touch recognition mode of the display unit 151, or the like.

As another example of the user input unit 123, a rear input unit (not shown) may be located on the rear surface of the terminal body. The rear input unit can be manipulated by a user to provide input to the mobile terminal 100. The input may be used in a variety of different ways. For example, the rear input unit may be used by the user to provide an input for power on/off, start, end, scroll, control volume level being output from the first or second audio output modules 152a or 152b, switch to a touch recognition mode of the display unit 151, and the like. The rear input unit may be configured to permit touch input, a push input, or combinations thereof.

The rear input unit may be located to overlap the display unit 151 of the front side in a thickness direction of the terminal body. As one example, the rear input unit may be located on an upper end portion of the rear side of the terminal body such that a user can easily manipulate it using a forefinger when the user grabs the terminal body with one hand. Alternatively, the rear input unit can be positioned at most any location of the rear side of the terminal body.

Embodiments that include the rear input unit may implement some or all of the functionality of the first manipulation unit 123a in the rear input unit. As such, in situations where the first manipulation unit 123a is omitted from the front side, the display unit 151 can have a larger screen.

As a further alternative, the mobile terminal 100 may include a finger scan sensor which scans a user's fingerprint. The control unit 180 can then use fingerprint information sensed by the finger scan sensor as part of an authentication procedure. The finger scan sensor may also be installed in the display unit 151 or implemented in the user input unit 123.

The microphone 122 is shown located at an end of the mobile terminal 100, but other locations are possible. If desired, multiple microphones may be implemented, with such an arrangement permitting the receiving of stereo sounds.

The interface unit 160 may serve as a path allowing the mobile terminal 100 to interface with external devices. For example, the interface unit 160 may include one or more of a connection terminal for connecting to another device (for example, an earphone, an external speaker, or the like), a port for near field communication (for example, an Infrared Data Association (IrDA) port, a Bluetooth port, a wireless LAN port, and the like), or a power supply terminal for supplying power to the mobile terminal 100. The interface unit 160 may be implemented in the form of a socket for accommodating an external card, such as Subscriber Identification Module (SIM), User Identity Module (UIM), or a memory card for information storage.

The second camera 121b is shown located at the rear side of the terminal body and includes an image capturing direction that is substantially opposite to the image capturing direction of the first camera unit 121a. If desired, second camera 121a may alternatively be located at other locations, or made to be moveable, in order to have a different image capturing direction from that which is shown.

The second camera 121b can include a plurality of lenses arranged along at least one line. The plurality of lenses may also be arranged in a matrix configuration. The cameras may be referred to as an "array camera." When the second camera 121b is implemented as an array camera, images may be captured in various manners using the plurality of lenses and images with better qualities.

As shown in FIG. 1C, a flash 124 is shown adjacent to the second camera 121b. When an image of a subject is captured with the camera 121b, the flash 124 may illuminate the subject.

As shown in FIG. 1B, the second audio output module 152b can be located on the terminal body. The second audio output module 152b may implement stereophonic sound functions in conjunction with the first audio output module 152a, and may be also used for implementing a speaker phone mode for call communication.

At least one antenna for wireless communication may be located on the terminal body. The antenna may be installed in the terminal body or formed by the case. For example, an antenna which configures a part of the broadcast receiving module 111 may be retractable into the terminal body. Alternatively, an antenna may be formed using a film attached to an inner surface of the rear cover 103, or a case that includes a conductive material.

A power supply unit 190 for supplying power to the mobile terminal 100 may include a battery 191, which is mounted in the terminal body or detachably coupled to an outside of the terminal body. The battery 191 may receive power via a power source cable connected to the interface unit 160. Also, the battery 191 can be recharged in a wireless manner using a wireless charger. Wireless charging may be implemented by magnetic induction or electromagnetic resonance.

The rear cover 103 is shown coupled to the rear case 102 for shielding the battery 191, to prevent separation of the battery 191, and to protect the battery 191 from an external impact or from foreign material. When the battery 191 is detachable from the terminal body, the rear case 103 may be detachably coupled to the rear case 102.

An accessory for protecting an appearance or assisting or extending the functions of the mobile terminal 100 can also be provided on the mobile terminal 100. As one example of an accessory, a cover or pouch for covering or accommodating at least one surface of the mobile terminal 100 may be provided. The cover or pouch may cooperate with the display unit 151 to extend the function of the mobile terminal 100. Another example of the accessory is a touch pen for assisting or extending a touch input to a touch screen.

In the present disclosure, the term "memory 170" may also be referred as the "storage unit 170".

The input unit 120 of the mobile terminal 100 may include the sensing unit 140 and perform all functions performed by the sensing unit 140. For example, the input unit 120 may sense a user touch input.

Hereinafter, descriptions will be provided by exemplifying the mobile terminal 100, but the present disclosure is not limited thereto. The present disclosure may be applied to any apparatuses that can display an image.

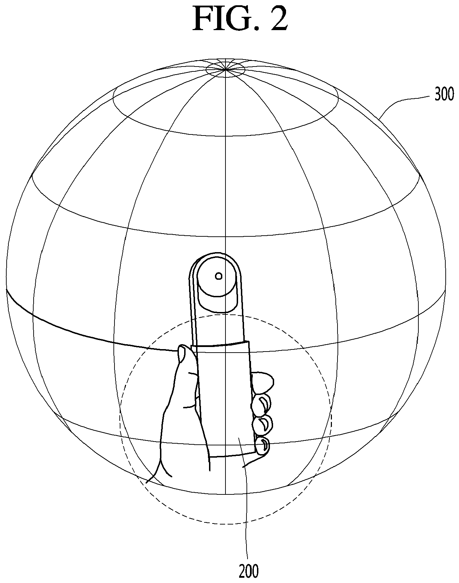

FIGS. 2 to 4 are diagrams illustrating issues related to the present disclosure.

First, an omnidirectional image 300 will be described.

The omnidirectional image 300 may be an image captured in all directions with respect to a specific point.

For example, when a virtual sphere is present and the specific point is a center of the virtual sphere, the all directions may be all directions from the center of the virtual sphere to a surface of the virtual sphere.

That is, when an image is captured by using an omnidirectional capturing device 200 such as a 360-degree camera, the omnidirectional image 300 may be an image captured in all direction with respect to the omnidirectional capturing device 200. For example, an omnidirectionally captured image may be an image captured by using a camera including two fisheye lenses having a view angle of 180°, which are disposed opposite to each other.

Meanwhile, the omnidirectional image 300 has been described by exemplifying the virtual sphere above, but the present disclosure is not limited thereto.

Specifically, when an image within a specific view angle is captured by using the omnidirectional capturing device 200, an omnidirectionally captured image may be an image captured in all directions within the specific view angle.

For example, when capturing is performed by setting an omnidirectional capturing camera to have a view angle of 180°, then omnidirectional image 300 may be an image captured in all direction from a center of a virtual hemisphere to a surface of the virtual hemisphere.

In addition, the omnidirectional image 300 may be an image captured at a specific view angle or more. For example, the omnidirectional image 300 may be an image captured at a view angle of 90° or more.

Furthermore, the case where an image is captured by using the omnidirectional capturing device 200 has been described above, but the present disclosure is not limited thereto. For example, the present disclosure may also be applied in a case where a plurality of images are captured by using a general capturing device rather than the omnidirectional capturing device 200 and the omnidirectional image 300 is generated by mixing the plurality of images.

Meanwhile, the omnidirectional image 300 may be distinguished from a normal image. The normal image may be not the omnidirectional image but may be an image captured through a general capturing method. For example, the normal image may be an image captured by a telephoto lens, a normal lens, or a wide angle lens.

In addition, the normal image may be an image captured at a specific view angle or less. For example, the normal image may be an image captured at a view angle of 90° or less.

Furthermore, the normal image may be a portion of the omnidirectional image 300. Specifically, the normal image may be an image captured within a specific angle of an omnidirectionally captured image. For example, when an image having a view angle of 45° is acquired by dividing an omnidirectionally captured image (which has a view angle of 360°), the normal image may be an image within an angle range of 45° acquired from an image captured at a view angle of 360°.

In addition, the normal image may be an image displayed in a normal mode. The normal mode may be a mode in which a whole region of a captured image is displayed.

On the contrary, the omnidirectional image 300 may be an image displayed in an omnidirectional display mode. The omnidirectional display mode may be a mode in which an image of a partial region in the omnidirectional image 300 is displayed, and then, images in other regions of the omnidirectional image are displayed according to an operation of a user.

Meanwhile, the terms "normal mode" may be interchangeably used with the term "normal display mode".

When a virtual sphere is present and the omnidirectional capturing device 200 is placed in a center of the virtual sphere, the omnidirectional image 300 may be an image captured in all directions with respect to the omnidirectional capturing device 200. In addition, a whole region of the omnidirectional image 300 may mean a region of a whole surface in the virtual sphere.

While the whole region of the omnidirectional image 300 has been described by exemplifying the virtual sphere with respect to the omnidirectional capturing device 200 for convenience of description, this just indicates that images in all directions are captured by the omnidirectional capturing device 200. However, it should not be understood that the images in all directions are at an equal distance from the omnidirectional capturing device 200. Imagining the celestial sphere displaying a lot of constellations located at different distances from the earth, this is easy to understand.

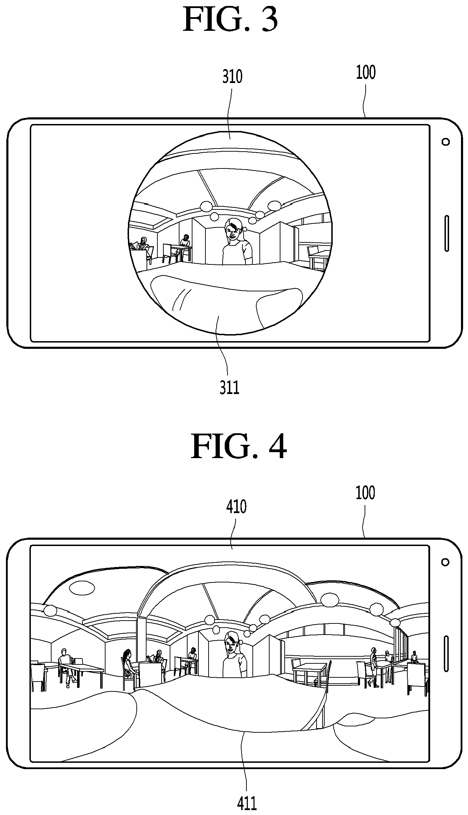

When a user holds the omnidirectional capturing device 200 in a hand 311 to capture the omnidirectional image 300 as shown in FIG. 2, due to characteristics of the omnidirectional capturing device 200 capturing images in all directions, the hand 311 may be displayed in an omnidirectional image 310 displayed as shown in FIG. 3. Since the hand 311 of the user is located very close to a lens of the omnidirectional capturing device 200 at the time of capturing, the hand 311 of the user may be displayed in a large size in the front image 310.

The hand 311 unavoidably included in the omnidirectional image 310 may not be an object which interests the user, and the user may be repulsed by a shape of the hand 311.

In particular, when a plane image 410 of the omnidirectional image 300 is displayed as shown in FIG. 4, a hand 411 may be greatly and severely distorted and displayed.

Since the omnidirectional image 300 is an image captured in a spherical shape but the plane image 410 is an image displayed in a plane shape, the distortion is generated in a process of spreading a sphere into a plane. Imagining a process of making a map by spreading a globe into a plane, this is easy to understand.

Due to a position of the hand 411 grasping the omnidirectional capturing device 200, the hand 411 becomes an issue in a process of converting the omnidirectional image 300 into the plane image 410. Specifically, since a front direction of the omnidirectional capturing device 200 generally becomes a center of the plane image 410 in the omnidirectional image 300 and the user captures an image by grasping a lower portion of the omnidirectional capturing device 200, the hand 411 of the user is displayed at a lower portion of the plane image 410, i.e., a lower region of the plane image 410.

In the process of spreading the sphere into the plane, an upper region and the lower region are even further enlarged compared to an intermediate region. Therefore, as shown in FIG. 4, the hand 411 may be widely enlarged in the lower region of the plane image 410 from side to side and is unattractively displayed.

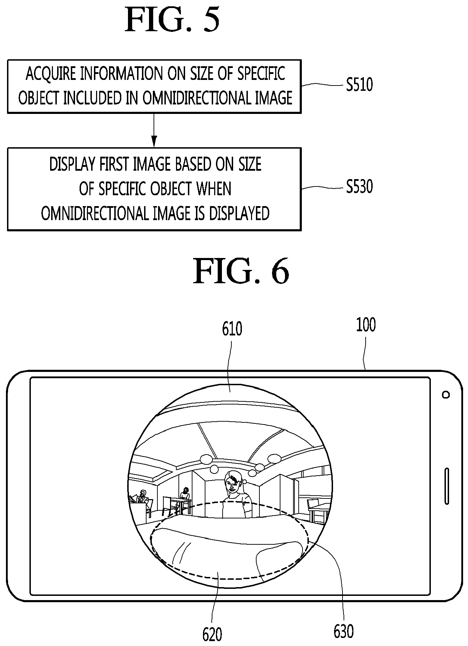

FIG. 5 is a diagram illustrating an operating method of a display apparatus, according to an embodiment of the present disclosure.

The operating method of the display apparatus according to the embodiment of the present disclosure may include an operation (S5510) of acquiring information on a size of a specific object included in an omnidirectional image and an operation (S530) of displaying a first image based on the size of the specific object when the omnidirectional image is displayed

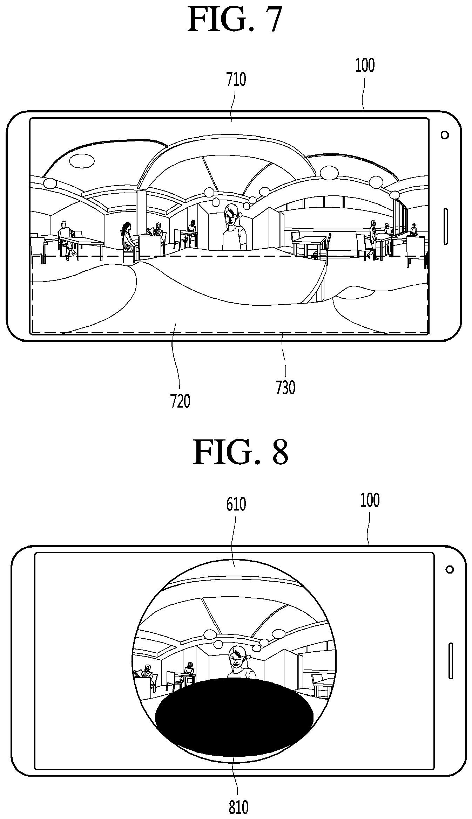

FIGS. 6 and 7 are diagrams illustrating a method of acquiring information on a display region of a specific object, according to an embodiment of the present disclosure.

An omnidirectional image 300 may include the specific object.

The specific object may be an object used to support the omnidirectional capturing device 200 so as to perform capturing by using the omnidirectional capturing device 200.

For example, the specific object may be a hand of a user photographing the omnidirectional image. The specific object is not limited thereto and may include all objects used to support the omnidirectional capturing device 200 at the time of capturing.

Meanwhile, a control unit 180 may acquire information on a size of the specific object included in the omnidirectional image.

Specifically, the control unit 180 may acquire the information on the display region of the specific object in the omnidirectional image to be displayed on a screen.

More specifically, even when an identical omnidirectional image is displayed, an image to be displayed may vary according to a display mode. Therefore, the display region of the specific object may also vary according to a display mode.

For example, FIG. 6 is a diagram illustrating an omnidirectional image 610 displayed in an omnidirectional display mode. The omnidirectional display mode may be a mode in which an image of a partial region in an omnidirectional image is displayed, and then, images of other regions in the omnidirectional image are displayed according to an operation of a user.

The omnidirectional image 610, which corresponds to a front hemisphere region of a whole region in an omnidirectional image, is displayed in FIG. 6.

A display region 630 of a specific object 620 in the omnidirectional image 610 displayed in the omnidirectional display mode is as shown in FIG. 6.

In addition, FIG. 7 is a diagram illustrating an omnidirectional image 710 displayed in a normal mode. The normal mode may be a mode in which an image of a whole region in an omnidirectional image is displayed.

The omnidirectional image 710, which corresponds to a whole region of an omnidirectional image, is displayed in FIG. 7.

A display region 730 of a specific object 720 in the omnidirectional image 710 displayed in the normal mode is as shown in FIG. 7.

That is, even when an identical omnidirectional image 300 is displayed, an image to be displayed may vary according to a display mode. Therefore, the specific objects 620 and 720 may also differently displayed according to a display mode, and the display regions 630 and 730 of the specific objects 620 and 720 may also vary according to the display mode.

On the other hand, the control unit 180 may acquire information on each of the display regions 630 and 730 of the specific objects 620 and 720 in the omnidirectional images 610 and 710 to be displayed. In addition, the control unit 180 may acquire information on a size of each of the display regions 630 and 730 of the specific objects 620 and 720 in the omnidirectional images 610 and 710 to be displayed.

Meanwhile, a sense of the phrase "information on a size of a specific object is acquired" is not limited to a case where information on a specific region surrounding the specific object is acquired.

Specifically, the display regions 630 and 730 of the specific objects 620 and 720 are described with reference to FIGS. 6 and 7 as being a figure such as an oval or a quadrangle surrounding the specific regions 630 and 730. The present disclosure is not limited thereto, and the size of each of the specific object 620 and 720 included in the omnidirectional images 610 and 710 to be displayed may be acquired based on a size of each of the specific object 620 and 720 themselves. For example, the size of each of the specific objects 620 and 670 may be acquired by using a contour of each of the specific objects 620 and 670.

In addition, the display regions 630 and 730 of the specific objects 620 and 670 may be a minimum region surrounding capable of each of the specific objects 620 and 670. The present disclosure is not limited thereto, and the display regions 630 and 730 of the specific objects 620 and 670 may be smaller or greater than the minimum region surrounding capable of each of the specific objects 620 and 670.

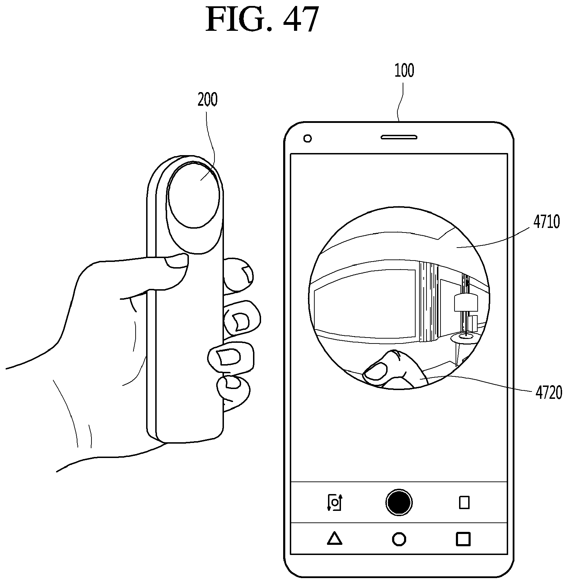

A size of a specific object may mean the size of each of the specific objects 620 and 670 in the omnidirectional images 610 and 710 displayed on a screen as well as a size of a specific image included in an omnidirectional image. For example, the control unit 180 may acquire information on a size of a specific object from the omnidirectional image having the spherical shape shown in FIG. 2. This will be described with reference to FIGS. 47 to 49 again.

Meanwhile, when the omnidirectional image is displayed, the control unit 180 may display a first image based on the size of the specific object. Specifically, when the omnidirectional image is displayed, the control unit 180 may acquire information on each of the display regions 630 and 730 of the specific objects 620 and 720 in the omnidirectional images 610 and 710 to be displayed, and display the first image in each of the display regions 630 and 730 based on a size of each of the display regions 630 and 730. Information included in the first image may be variable based on at least one of the size of each of the display regions 630 and 730 and display modes of the omnidirectional images 610 and 710.

In addition, the first image may be displayed based on a ratio of the display regions 630 and 730.

This will be described with reference to FIGS. 8 to 11.

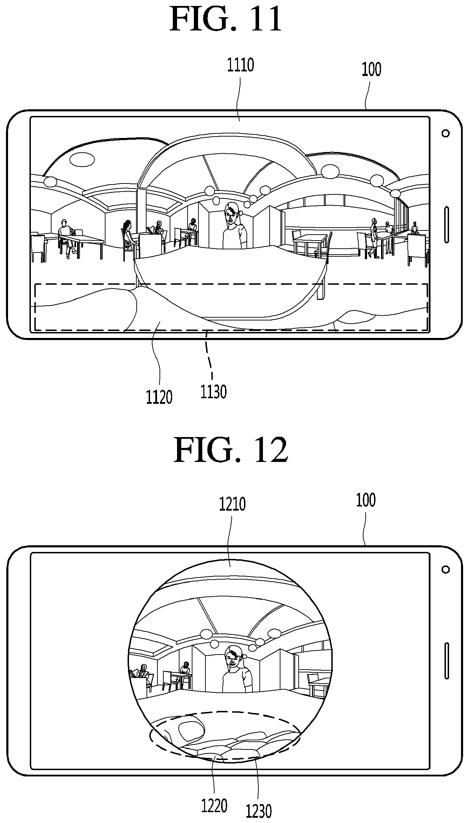

FIGS. 8 and 11 are diagrams illustrating a method of determining whether to display a first image based on a ratio of a display region, according to an embodiment of the present disclosure.

It may be determined based on the ratio of the display region in a specific object whether to display the first image.

The ratio of the display region in the specific object may be a ratio of the display region to an omnidirectional image to be displayed.

That is, a ratio of the display region is a ratio occupied by the display region in the displayed omnidirectional image

For example, when a whole area of the omnidirectional image to be displayed is 100 and an area of the display region in the specific object is 30, the ratio of the display region in the specific object may be 30%.

Meanwhile, when the ratio of the display region is greater than a preset ratio, the control unit 180 may display the first image.

For example, descriptions assume that the preset ratio is 30%.

As shown in FIG. 8, when an omnidirectional image 610 is displayed in an omnidirectional display mode and a ratio of a display region in a specific object is 32% greater than the preset ratio of 30%, the control unit 180 may display a first image 810 in the display region of the specific object.

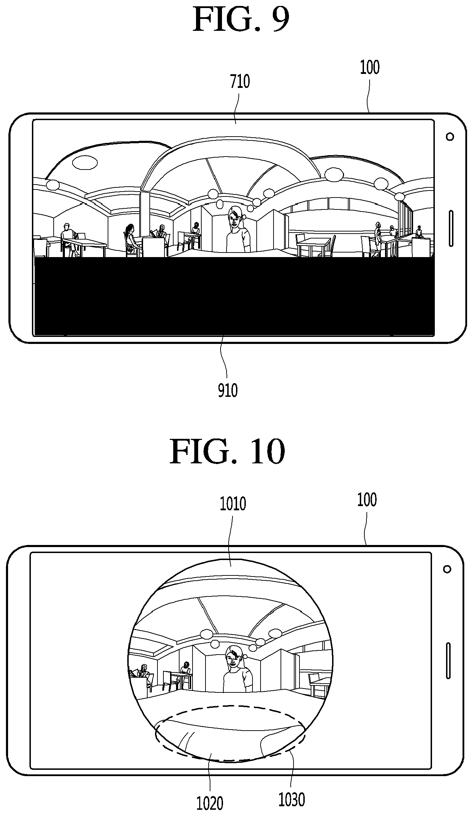

In addition, as shown in FIG. 9, when an omnidirectional image 710 is displayed in a normal mode and a ratio of a display region in a specific object is 40% greater than the preset ratio of 30%, the control unit 180 may display a first image 910 in the display region of the specific object.

The phrase "the first image 910 is displayed in the display region of the specific object" may mean that the omnidirectional images 610 and 710 are displayed and the first images 810 and 910 are displayed to respectively overlap the omnidirectional images 610 and 710. In addition, the first images 810 and 910 may be opaquely displayed as well as translucently displayed.

Meanwhile, as shown in FIG. 10, when an omnidirectional image 1010 is displayed in an omnidirectional display mode and a ratio of a display region 1030 in a specific object 1020 is 20% less than the preset ratio of 30%, the control unit 180 may not display a first image in the display region 1030 of the specific object 1020.

In addition, as shown in FIG. 11, when an omnidirectional image 1110 is displayed in a normal mode and a ratio of a display region 1130 in a specific object 1120 is 29% less than the preset ratio of 30%, the control unit 180 may not display a first image in the display region 1130 of the specific object 1120.

When the beauty may be spoiled in a case where a specific object is displayed to an excessively large size, it is desirable that the specific object is covered with a first image. However, the beauty may not be spoiled in a case where the specific object is displayed in a small size, so that it is unnecessary to display the first image even in this case.

Therefore, according to the present disclosure, an optimized display may be provided based on a size of a specific object displayed on a screen.

FIGS. 12 to 14 are illustrating a case where the same preset ratio is applied regardless of a display mode, according to an embodiment of the present disclosure.

A ratio of a display region in an omnidirectional display mode may be different from a ratio of a display region in a normal mode. In this case, a preset ratio in the omnidirectional display mode may be the same as a preset ratio in the normal mode.

For example, the ratio of the display region in the omnidirectional display mode may be 20%, and the ratio of the display region in the normal mode may be 32%. Both of the preset ratio in the omnidirectional display mode and the preset ratio in the normal mode may be 30%.

When an omnidirectional image is displayed in the omnidirectional display mode and the ratio of the display region is less than the preset ratio, the control unit 180 may not display a first image.

For example, as shown in FIG. 12, when an omnidirectional image 1210 is displayed in the omnidirectional display mode and a ratio of a display region 1230 in a specific object 1220 is 20% less than a preset ratio of 30%, the control unit 180 may not display a first image i810 in the display region 1230 of the specific object 1220.

In addition, when an omnidirectional image is displayed in the normal mode and the ratio of the display region is greater than the preset ratio, the control unit 180 may display a first image.

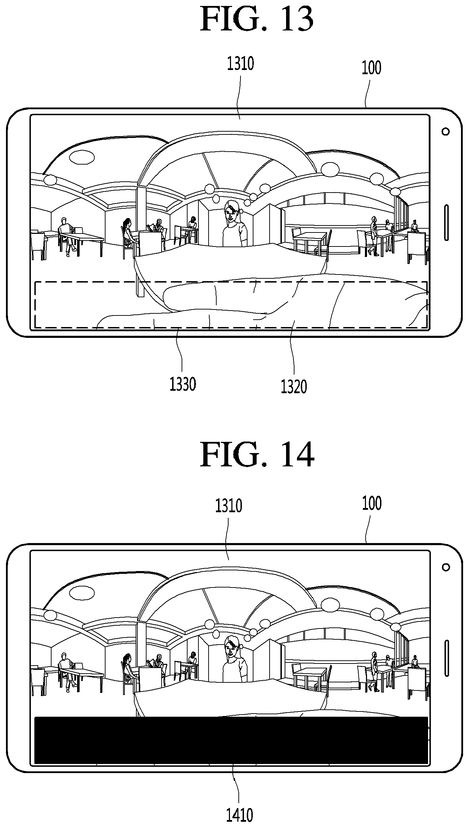

For example, as shown in FIG. 13, when an omnidirectional image 1310 is displayed in the normal mode and a ratio of a display region 1330 in a specific object 1320 is 32% greater than a preset ratio of 30%, as shown in FIG. 14, the control unit 180 may display a first image 1410 in the display region 1330 of the specific object 1320.

That is, regardless that a display mode is the omnidirectional display mode or the normal mode, the preset ratio may be identically applied.

Generally, when an omnidirectional image is displayed in the normal mode, a specific object may be more greatly displayed. Therefore, when the omnidirectional image is displayed in the omnidirectional display mode, a user may not care the presence of the specific object. However, when the omnidirectional image is displayed in a normal display mode, the presence of the specific object may bother the user.

Therefore, the present disclosure may provide an optimized display depending on the situation by identically applying the preset ratio regardless that a display mode is any mode

Meanwhile, in the present embodiment, the preset ratio has been described as being identically applied regardless that the display mode is the omnidirectional display mode or the normal mode.

However, the present disclosure is not limited thereto, and the preset ratio may be differently applied according to the display mode.

Specifically, the omnidirectional image may be displayed in the omnidirectional display mode or the normal mode.

In this case, the preset ratio in the omnidirectional display mode may be different from the preset ratio in the normal mode. In addition, the preset ratio in the omnidirectional display mode may be less than the preset ratio in the normal mode.

For example, when the omnidirectional image is displayed in the omnidirectional display mode, the preset ratio may be 20%. Meanwhile, when the omnidirectional image is displayed in the normal mode, the preset ratio may be 30%.

When the omnidirectional image is displayed in the omnidirectional display mode and the ratio of the display region is greater than a first preset ratio, the control unit 180 may display a first image. The first preset ratio may be the preset ratio in the omnidirectional display mode.

For example, when a ratio of a display region is 20% in the omnidirectional display mode and the first preset ratio is 20%, the control unit 180 may display the first image.

Meanwhile, when the omnidirectional image is displayed in the normal display mode and the ratio of the display region is greater than a second preset ratio, the control unit 180 may display the first image. The second present ratio may be the preset ratio in the normal display mode.

For example, when a ratio of a display region is 30% in the normal display mode and the second preset ratio is 35%, the control unit 180 may display the first image.

Generally, when an omnidirectional image is displayed in the normal mode, a specific object may be more greatly displayed. Therefore, it is necessary to differently apply the preset ratio according to a display mode.

As described above, the present disclosure may provide an optimized display by differently applying the preset ratio according to the display mode.

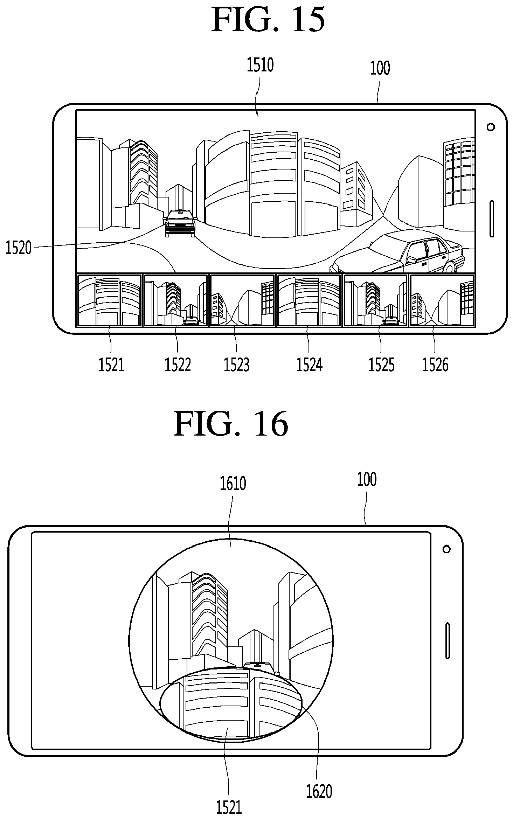

FIGS. 15 and 16 are diagrams illustrating information included in a first image changed according to a display mode.

The first image may include art least one piece of information. In addition, the first image may include a plurality of pieces of information.

The at least piece of information or the plurality of pieces of information may include a text, an image, and the like.

On the other hand, the number of pieces of information included in an omnidirectional image may be changed based on a display mode.

Specifically, when an omnidirectional image is displayed in an omnidirectional display mode, an omnidirectional image 1610 may be displayed in a spherical shape as shown in FIG. 16. The omnidirectional image 1610 displayed in the spherical shape may be an image corresponding to a hemisphere region of a whole region in the omnidirectional image.

In addition, when an omnidirectional image is displayed in a normal display mode, an omnidirectional image 1510 may be displayed as a quadrangular image as shown in FIG. 15.

On the other hand, a display region of a specific object when the omnidirectional image (first image) 1610 is displayed in the omnidirectional display mode as shown in FIG. 16 is smaller than a display region of a specific object when the omnidirectional image (first image) 1510 is displayed in the normal display mode as shown in FIG. 15.

Therefore, when an omnidirectional image is displayed in the normal display mode as shown in FIG. 15, the control unit 180 may display the first image 1510 including a plurality of pieces of information 1521, 1522, 1523, 1524, 1525, and 1526 in a display region having a first size. In addition, when an omnidirectional image is displayed in the omnidirectional display mode as shown in FIG. 16, the control unit 180 may display the first image 1620 including a portion (information 1521) of the plurality of pieces of information in a display region having a second size smaller than the first size.

The plurality of pieces of information may each be a thumbnail image.

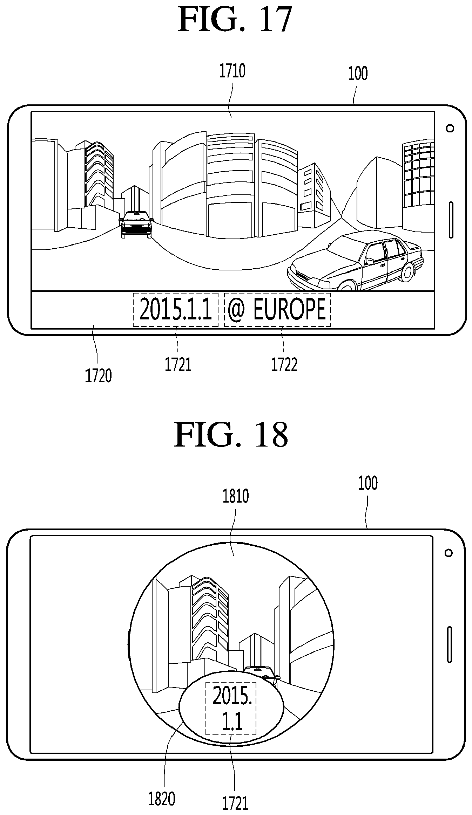

FIGS. 17 and 18 are diagrams illustrating information included in a first image changed according to a display mode, according to another embodiment of the present disclosure.

A display region of a specific object when an omnidirectional image 1810 is displayed in an omnidirectional display mode as shown in FIG. 18 is smaller than a display region of a specific object when an omnidirectional image 1710 is displayed in a normal display mode as shown in FIG. 17.

Therefore, when an omnidirectional image is displayed in the normal display mode as shown in FIG. 17, the control unit 180 may display a first image 1720 including a plurality of pieces of information 1721 and 1722 in a display region having a first size. In addition, when an omnidirectional image is displayed in the omnidirectional display mode as shown in FIG. 18, the control unit 180 may display a first image 1820 including a portion (information 1721) of the plurality of pieces of information in a display region having a second size smaller than the first size.

The plurality of pieces of information may each be a text.

As described above, the display region of the specific object may vary according to a display mode. Therefore, the present disclosure may provide the optimized number of pieces of information according to the display mode.

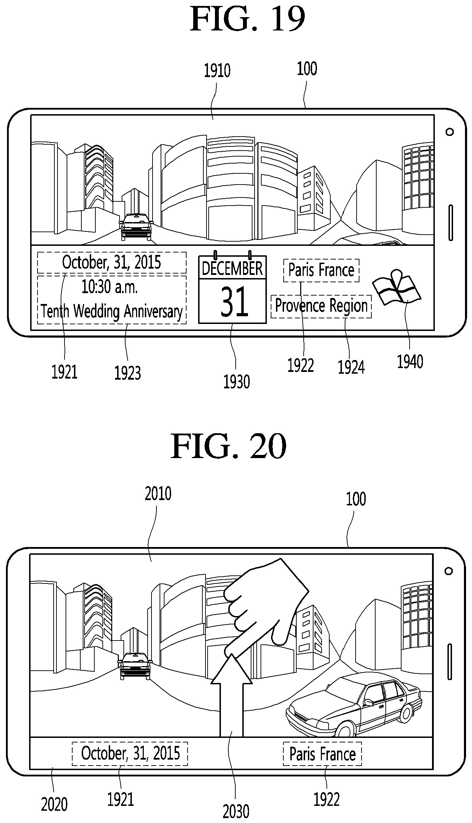

FIGS. 19 and 20 are diagrams illustrating information included in a first image changed according to a size of a display region, according to an embodiment of the present disclosure.

The number of pieces of information included in the first image may be changed based on the size of the display region.

Specifically, when a display region of a specific object has a large size as shown in FIG. 19, a first image 1920 may also be displayed in a large size.

In addition, when a display region of a specific object has a small size as shown in FIG. 20, a first image 2020 may also be displayed in a small size.

Meanwhile, when a size of the display region is greater than a preset size as shown in FIG. 19, the control unit 180 may display the first image 1920 including a plurality of pieces of information 1921, 1922, 1923, and 1924 in the display region having the size greater than the preset size.

In addition, when a size of the display region is smaller than the preset size as shown in FIG. 20, the control unit 180 may display a first image 2020 including some information 1921 and 1922 of the plurality of pieces of information 1921, 1922, 1923, and 1924 in the display region having the size smaller than the preset size.

On the other hand, when an input of selecting a first image including some information is received in a state in which the first image including some information is displayed, the control unit 180 may display an image including a plurality of pierces of information.

Specifically, the control unit 180 may receive an input of touching the first image 2020 and then dragging the first image 2020 upward in a state in which the first image 2020 of the FIG. 20 is displayed. In this case, the size of the first image 2020 may be increased, and the first image 2020 having the increased size may include the plurality of pieces of information 1921, 1922, 1923, and 1924.

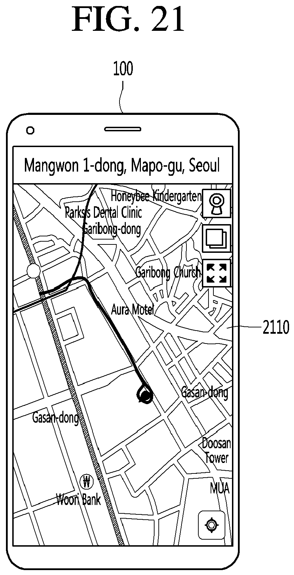

FIG. 21 is a diagram illustrating a method of linking a first image and an application, according to an embodiment of the present disclosure.

Descriptions will be provided together with FIG. 19.

Referring to FIG. 19, the first image 1920 may include one or more icons 1930 and 1940. The one or more icons 1930 and 1940 may respectively correspond to one or more applications.

Meanwhile, when an input of selecting a second icon 1940 of the one or more icons 1930 and 1940 is received, the control unit 180 may execute a first application corresponding to the second icon 1940. In addition, as shown in FIG. 21, the control unit 180 may display an execution screen 2110 of the first application including information related to an omnidirectionally captured image.

For example, when the second icon 1940 is an icon corresponding to a map application, the control unit 180 may display a point on an execution screen of the map application, the point corresponding to a place in which an omnidirectional image 1910 is captured.

In another example, when a first icon 1930 is selected and the first icon 1930 is an icon corresponding to a certain application, the control unit 180 may display an item on an execution screen of the certain application, the item corresponding to a date and time when the omnidirectional image 1910 is captured.

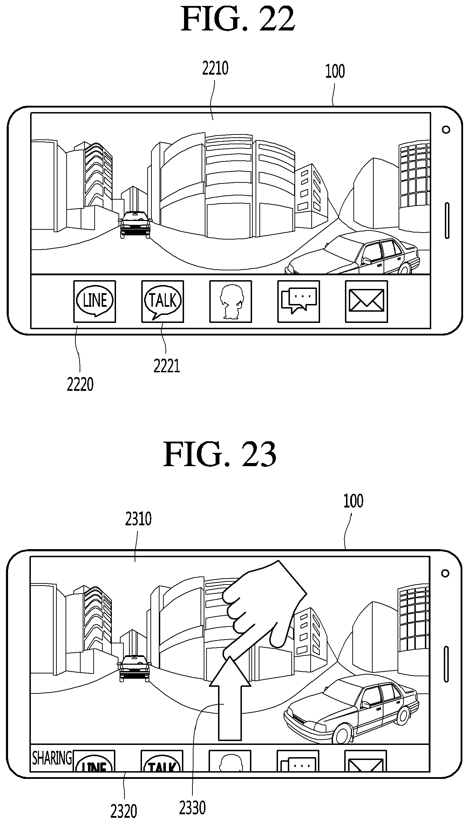

FIGS. 22 and 23 are diagrams illustrating a first image changed according to a size of a display region, according to an embodiment of the present disclosure.

A whole or a portion of the first image may be displayed based on the display region.

Specifically, when a display region of a specific object has a large size as shown in FIG. 22, a first image 2220 may also be displayed in a large size.

In addition, when a display region of a specific object has a small size as shown in FIG. 23, a first image 2320 may also be displayed in a small size.

Meanwhile, when a size of the display region is greater than a preset size as shown in FIG. 22, the control unit 180 may display the first image 2220 including a whole of a second image in the display region having the size greater than the preset size. That is, the first image 2220 may be the same as the second image.

In addition, when a size of a display region is smaller than a preset size as shown in FIG. 23, the control unit 180 may display a first image 2320 including a portion of the second image in the display region having the size smaller than the preset size.

On the other hand, in a state in which the first image 2320 of the FIG. 23 is displayed, the control unit 180 may receive an input of touching the first image 2320 and then dragging the first image 2320 upward. In this case, the control unit 180 may display an image including a whole of the second image.

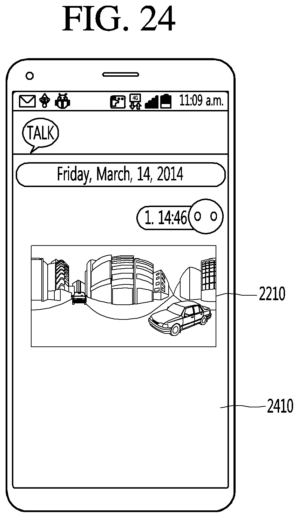

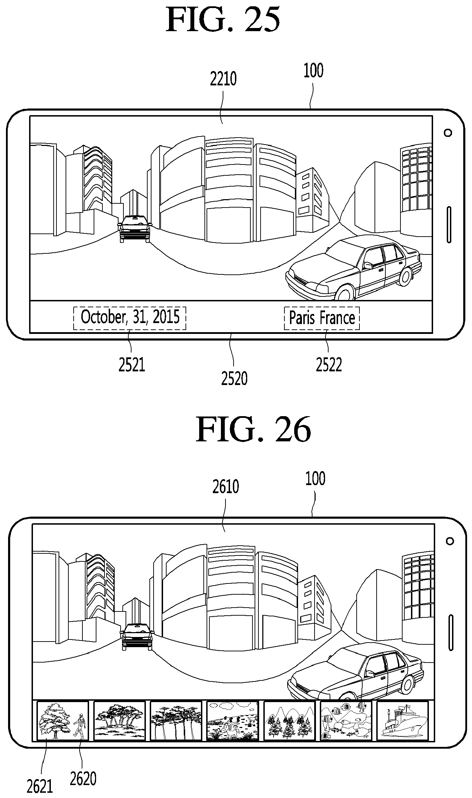

FIGS. 24 and 25 are diagrams illustrating a method of sharing an omnidirectional image, according to an exemplary embodiment of the present disclosure.

Descriptions will be provided together with FIG. 22.

Referring to FIG. 22, the first image 2220 may include one or more icons. The one or more icons may respectively correspond to one or more applications.

Meanwhile, when an input of selecting a messenger icon 2221 of the one or more icons is received, as shown in FIG. 24, the control unit 180 displays an execution screen 2410 of a messenger application corresponding to the messenger icon 2221.

On the other hand, the control unit 180 may transmit an omnidirectional image 2210 to other mobile terminals.

In this case, the other mobile terminals may display the received omnidirectional image 2210.

As described above, embodiments may also be implemented in a manner in which the other mobile terminals transmit an omnidirectional image to a mobile terminal 100. Specifically, the other mobile terminals may transmit the omnidirectional image 2210 to the mobile terminal 100 in the same manner described above.

Meanwhile, a first image displayed in the mobile terminal 100 may be different from a first image displayed in the other mobile terminals.

Specifically, the first image displayed in the other mobile terminals may include information corresponding to the setting of the other mobile terminals. For example, when the first image is set to include a plurality of thumbnail images in the other mobile terminals, the other mobile terminals may display the first image including the plurality of thumbnail images together with the omnidirectional image.

In addition, the other mobile terminals may transmit the omnidirectional image to the mobile terminal 100 without transmitting the first image.

On the other hand, when the omnidirectional image 2210 is received, as shown in FIG. 25, the control unit 180 may display the omnidirectional image 2210. In addition, the control unit 180 may display a first image 2520 together with the omnidirectional image 2210.

Meanwhile, the first image 2520 may include information corresponding to the setting of the mobile terminal 100. For example, in the mobile terminal 100, when the first image 2520 is set to include time information 2521 and place information 2522 in which the first image 2520 is captured, the control unit 180 of the mobile terminal 100 may display the first image 2520 including the time information 2521 and the place information 2522.

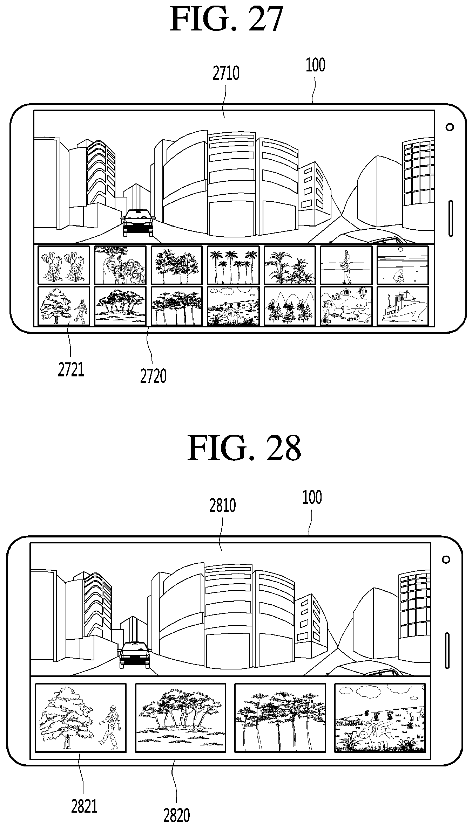

FIGS. 26 and 27 are diagrams illustrating the number of pieces of information included in a first image changed according to a size of a display region, according to an embodiment of the present disclosure.

The number of pieces of information included in the first image may be changed based on a size of the display region.

Specifically, when a display region of a specific object has a small size as shown in FIG. 26, a first image 2620 may also be displayed in a small size.

In addition, when a display region of a specific object has a large size as shown in FIG. 27, a first image 2720 may also be displayed in a large size. As shown in FIG. 26, when a size of the display region is smaller than a preset size, the control unit 180 may display a first image 2620 including a first number of pieces of information in the display region.

In addition, as shown in FIG. 27, when a size of a display region is greater than a preset size, the control unit 180 may display a first image 2720 including a second number of pieces of information in the display region, the second number being greater than the first number.

Meanwhile, information included in the first images 2620 and 2720 may be at least one thumbnail image.

In addition, a size of the thumbnail image included in the first image 2620 including the first number of pieces of information may be the same as a size of the thumbnail image included in the first image 2720 including the second number of pieces of information.

FIG. 28 is a diagram illustrating a size of information included in a first image changed according to a size of a display region, according to an embodiment of the present disclosure.

The size of the information included in the first image may be changed based on the size of the display region.

Specifically, when a display region of a specific object has a small size as shown in FIG. 26, the first image 2620 may also be displayed in a small size.

In addition, when a display region of a specific object has a large size as shown in FIG. 28, a first image 2820 may also be displayed in a large size.

Meanwhile, as shown in FIG. 26, when a size of a display region is smaller than a preset size, the control unit 180 may display the first image 2620 including information 2621 having a first size in the display region.

In addition, as shown in FIG. 28, when a size of a display region is greater than a preset size, the control unit 180 may display the first image 2820 including information 2821 having a second size in the display region, the second size being greater than the first size.

Meanwhile, information included in the first images 2620 and 2820 may be at least one thumbnail image.

In addition, a thumbnail image having the first size and a thumbnail image having the second size may be the same image but have different sizes.

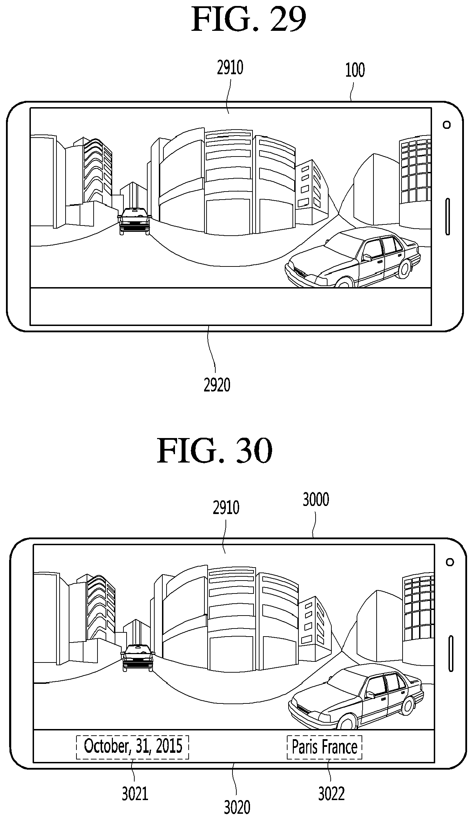

FIGS. 29 and 30 are diagrams illustrating a method of transmitting an omnidirectional image together with information included in a first image, according to an embodiment of the present disclosure.

FIG. 29 is a diagram illustrating a first image 2920 displayed together with an omnidirectional image 2910 when the omnidirectional image 2910 is displayed in a mobile terminal 100.

Referring to FIG. 29, the control unit 180 may display the first image 2920 without including information in the first image 1920.

On the other hand, the control unit 180 may transmit the omnidirectional image 2910 to other mobile terminal 3000. In addition, the control unit 180 may transmit information displayed in the first image 2920 to the other mobile terminal 3000 together with the omnidirectional image 2910.

FIG. 30 is a diagram illustrating a first image 3020 displayed together with an omnidirectional image 2910 when the omnidirectional image 2910 is displayed in other mobile terminal 3000.

Referring to FIG. 30, the control unit 180 may display the received omnidirectional image 2910. In addition, the control unit 180 may display the first image 3020 together with the received omnidirectional image 2910.

Furthermore, the control unit 180 may display pieces of information 3021 and 3022 displayed in the first image 2910 received from the mobile terminal 100 in the first image 3020.

Meanwhile, the pieces of information 3021 and 3022 displayed in the first image 3020 may include information on at least one of a time and a place in which capturing is performed in an omnidirection.

However, the present disclosure is not limited thereto, and the pieces of information 3021 and 3022 displayed in the first image 3020 may include advertisement information on a manufacturing company of the mobile terminal 100.

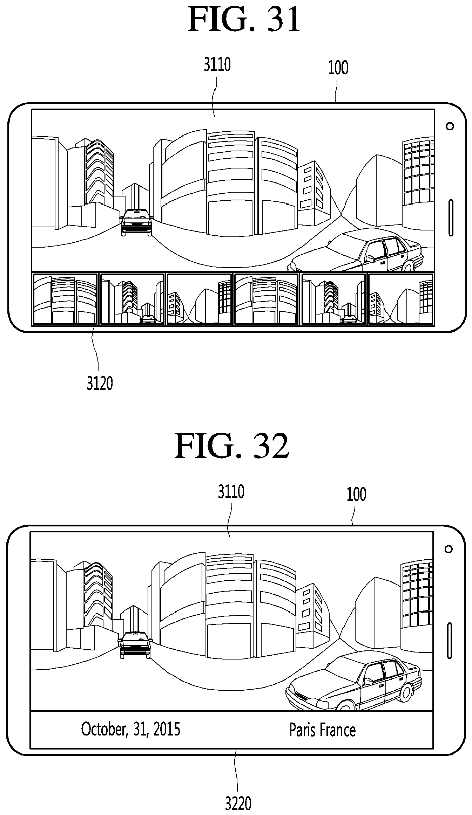

FIGS. 31 to 33 are diagrams illustrating a method of changing information included in a first image, according to an embodiment of the present disclosure.

The first image may include a variety of information.

For example, as shown in FIG. 31, a first image 3120 may include one or more thumbnail images respectively corresponding to one or more images related to an omnidirectional image 3110. That is, the one or more thumbnail images may be respectively thumbnail images of other images captured together with the omnidirectional image 3110. In addition, the one or more thumbnail images may be respectively thumbnail images of images which are captured in the same place as a place present in a server, in which the omnidirectional image 3110 is captured.

In addition, as shown in FIG. 32, a first image 3220 may include capturing information on the omnidirectional image 3110. The capturing information on the omnidirectional image 3110 may include information on at least one of a time and a place in which the omnidirectional image 3110 is captured.

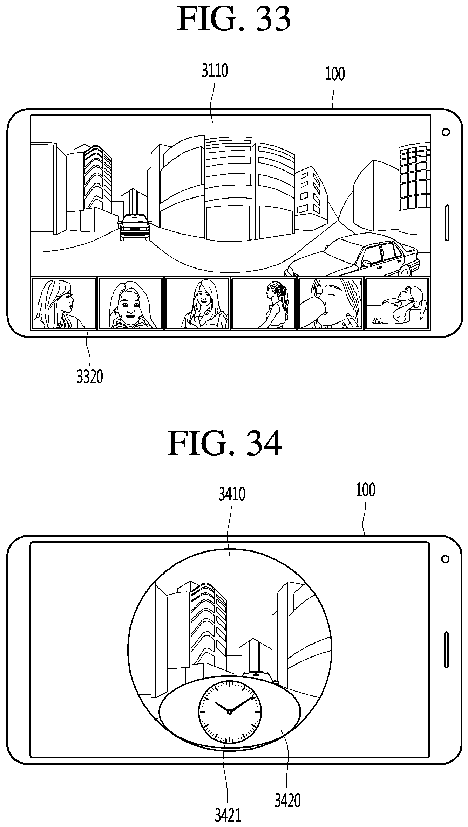

In addition, as shown in FIG. 33, a first image 3320 may include one or more thumbnail images respectively corresponding to one or more images related to the omnidirectional image 3110. That is, the one or more thumbnail images may be a thumbnail image corresponding to an image present in a gallery in a mobile terminal 100.

In another example, the one or more thumbnail images may be a thumbnail image corresponding to an image of a partial region in the omnidirectional image 3310. That is, a first thumbnail image may be a thumbnail image corresponding to an image of a first region in the omnidirectional image 3310, and a second thumbnail image may be a thumbnail image corresponding to an image of a second region in the omnidirectional image 3310.

Meanwhile, information included in the first image 3320 may be changed according to an input received from a user.

Specifically, when the first image 3320 including specific information is displayed together with the omnidirectional image 3310 and an input of touching the first image 3320 and then dragging the first image 3320 is received, the control unit 180 may display the first image 3320 including information different from specific information together with the omnidirectional image 3310.

FIGS. 34 to 36 are diagrams illustrating a variety of information displayed in an omnidirectional display mode, according to an embodiment of the present disclosure.

A first image may include a variety of information.

For example, as shown in FIG. 34, a first image 3410 may include information 3421 indicating a current time.

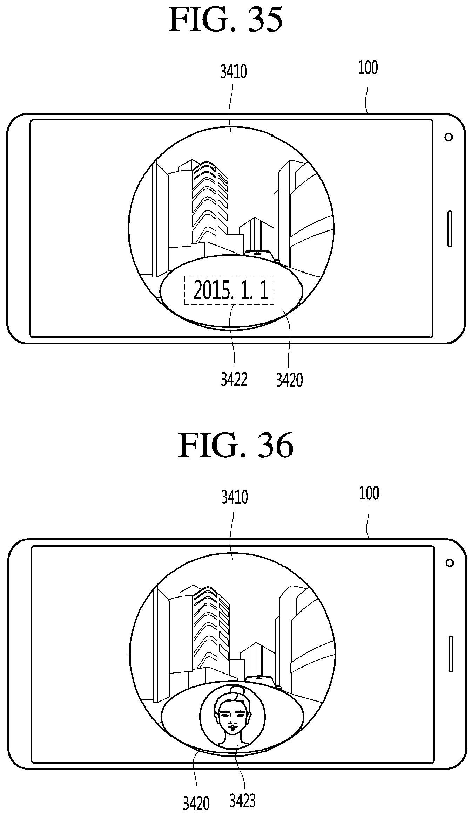

In addition, as shown in FIG. 35, a first image 3420 may include information on a time in which an omnidirectional image is captured.

Furthermore, as shown in FIG. 36, the first image 3420 may include a normal image 3423 different from an omnidirectional image 3410.

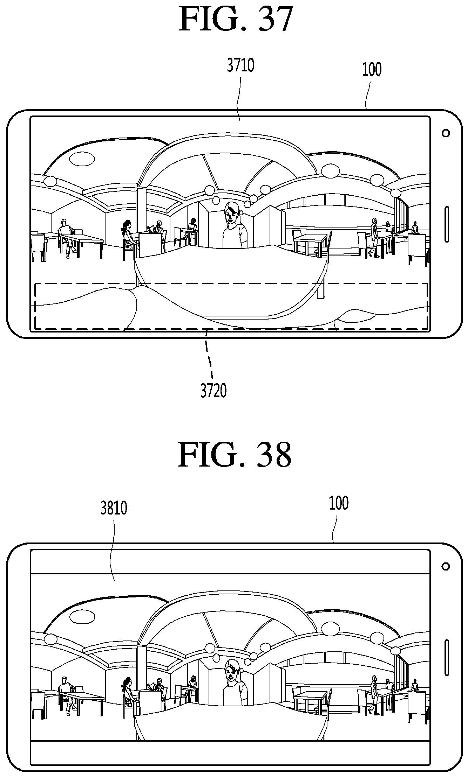

FIGS. 37 to 39 are diagrams illustrating a method of deleting a display region of a specific object and displaying an image of a remaining region, according to an embodiment of the present disclosure.

Referring to FIG. 37, an omnidirectional image 3710 may include a display region 3720 of a specific object.

A first image has been described above as being displayed in the display region 3720 of the specific object, but is not limited thereto.

Specifically, as shown in FIG. 18, the control unit 180 may display an image 3810 of a remaining region in the omnidirectional image 3710 except for the display region 3720 of the specific object.

In this case, the image 3810 of the remaining region except for the display region 3720 of the specific object may be displayed at a center of a screen in the mobile terminal 100.

In addition, the image 3810 of the remaining region may also be displayed in a different manner.

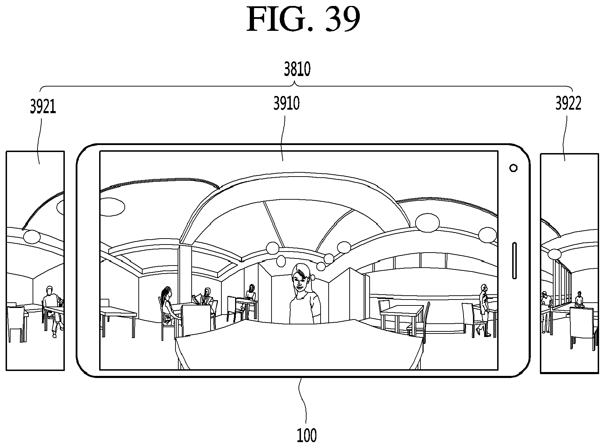

Specifically, as shown in FIG. 39, the control unit 180 may enlarge and display the image 3810 of the remaining region such that a height of the image 3810 in the remaining region is the same as a height of the screen.

In this case, a partial image 3910 of the image 3810 in the remaining region may be displayed on the screen, and other partial images 3921 and 3922 of the image 3810 in the remaining region may not be displayed on the screen.

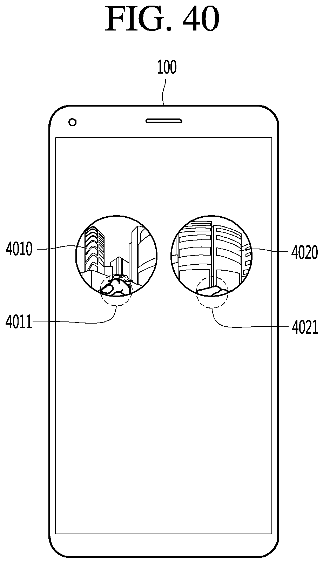

FIGS. 40 to 45 are diagrams illustrating a method of minimizing or eliminating a display region of a specific object, according to an embodiment of the present disclosure.

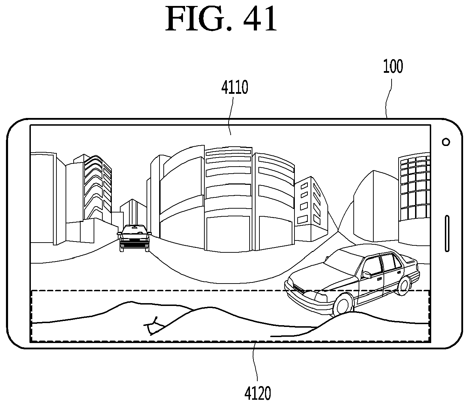

FIGS. 40 and 41 are diagrams illustrating an existing display region of a specific object.

Referring to FIG. 40, the mobile terminal 100 operates in an omnidirectional display mode and displays a first omnidirectional image 4010 corresponding to a front hemispherical region of a whole region in an omnidirectional image and a second omnidirectional image 4020 corresponding to a rear hemispherical region of the whole region in the omnidirectional image.

In addition, the omnidirectional image may include a specific object, and the first omnidirectional image 4010 and the second omnidirectional image 4020 may respectively include a first display region 4011 including a specific object and a second display region 4021 including a specific object.

On the other hand, referring to FIG. 41, the mobile terminal 100 operates in a normal display mode and displays a plane image 4110 corresponding to the whole region of the omnidirectional image.

In addition, the plane image 4110 corresponding to the whole region of the omnidirectional image includes a display region 4120 including a specific object.

A display region in the normal display mode is wider than a display region in the omnidirectional display mode. This is because a process of converting the omnidirectional image into the plane image 4110 includes a process of spreading a spherical image into a plane image.

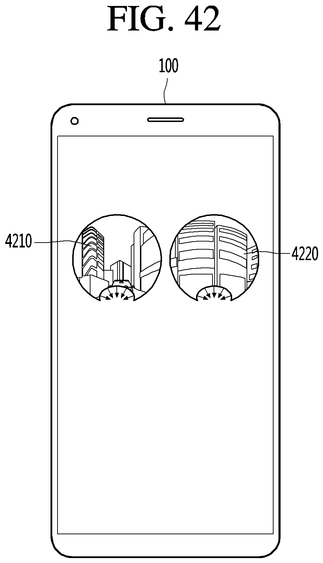

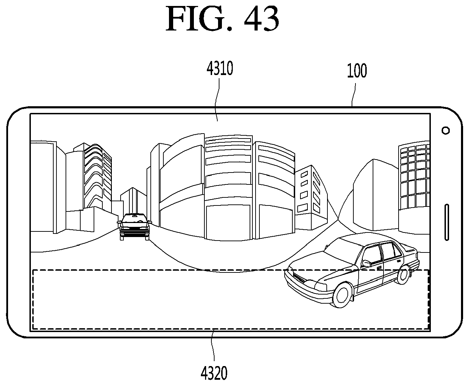

FIGS. 42 and 43 are diagrams illustrating a method of eliminating a display region of a specific object, according to an embodiment of the present disclosure.

When an omnidirectional image is displayed in the normal display mode, the control unit 180 may display a plane image of the omnidirectional image having a spherical shape except for a display region of a specific region in a whole region of the omnidirectional region.

For example, as shown in FIG. 42, the control unit 180 may display a plane image 4310 in FIG. 43 of an omnidirectional image by using remaining regions 4210 and 4220 except for a display region of a specific object in the omnidirectional image.

That is, a specific object may not be displayed, but an image of a remaining region except for a display region 4320 of the specific region may be enlarged and displayed in the display region 4320 in which the specific object is to be originally displayed.

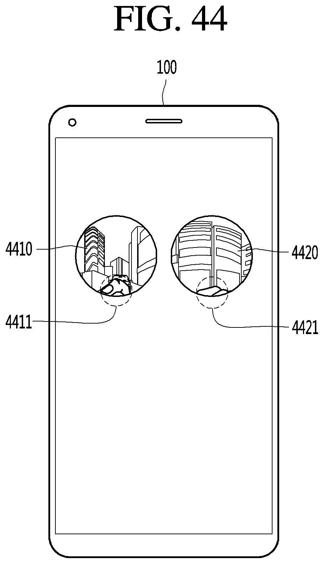

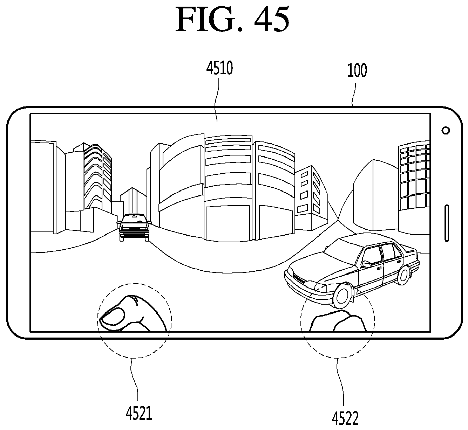

FIGS. 44 and 45 are diagrams illustrating a method of minimizing a display region of a specific object, according to an embodiment of the present disclosure.

When an omnidirectional image is displayed in the normal display mode, the control unit 180 may not enlarge images of display regions 4411 and 4421 in specific objects of a whole region of the omnidirectional image having a spherical shape.

In addition, when the omnidirectional image is displayed in the normal display mode, the control unit 180 may display a plane image 4510 of the omnidirectional image having the spherical shape by using the images of the display regions 4411 and 4421 in the specific objects and an image of a remaining region in a whole region of the omnidirectional region except for the display regions of the specific objects.

Specifically, the control unit 180 may display images 4521 and 4522 of the display regions 4411 and 4421 in the specific objects, which are not enlarged. In addition, the control unit 180 may enlarge and display the image of the remaining region except for the display regions 4411 and 4421 of the specific objects in a region of a whole region in the plane image 4510, which is not occupied by the images 4521 and 4522 of the display regions 4411 and 4421 in the specific objects, the images 4521 and 4522 being not enlarged.

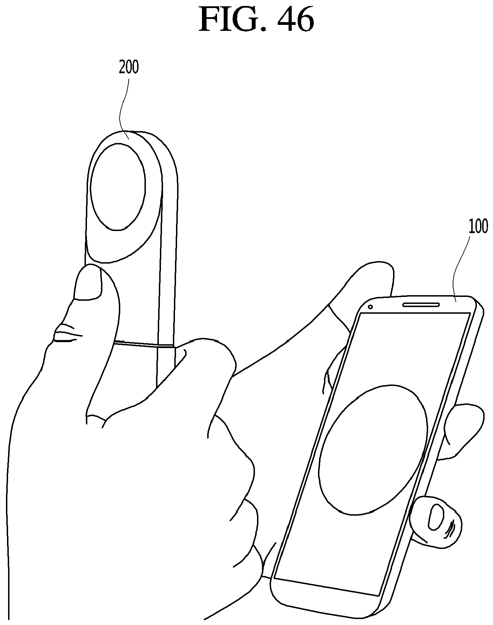

FIG. 46 is a diagram illustrating a mobile terminal 100 interworking with an omnidirectional capturing device 200, according to an exemplary embodiment of the present disclosure.

The mobile terminal 100 may receive and transmit data in a state of being connected to the omnidirectional capturing device 200 and

For example, the omnidirectional capturing device 200 may transmit an omnidirectional image received through the omnidirectional capturing device 200 to the mobile terminal 100. In this case, the mobile terminal 100 may display the received omnidirectional image as a preview image.

In addition, the omnidirectional capturing device 200 may transmit an image captured by the omnidirectional capturing device 200 to the mobile terminal 100. In this case, the mobile terminal 100 may store or display the captured image.

Furthermore, the omnidirectional capturing device 200 may transmit a capturing command to the mobile terminal 100. In addition, the mobile terminal 100 may also transmit a capturing command to the omnidirectional capturing device 200.

Meanwhile, the omnidirectional capturing device 200 and a camera unit 121 of the mobile terminal 100 may operate at the same time. For example, the omnidirectional image received from the omnidirectional capturing device 200 and a normal image received through the camera unit 121 may be displayed at the same time. In addition, the omnidirectional image and the normal image may be concurrently captured by using the omnidirectional capturing device 200 and the camera unit 121.

FIGS. 47 to 50 are diagrams illustrating a method of displaying an omnidirectional image and a normal image together, according to an embodiment of the present disclosure.

Referring to FIG. 47, a control unit 180 may display an omnidirectional image 4710 received from an omnidirectional capturing device 200 as a preview image.

In addition, the control unit 180 may acquire information on a size of a specific object included in an omnidirectionally captured image.

For example, the control unit 180 may acquire information on a size of a specific object 4720 included in the displayed omnidirectional image 4710. The present disclosure is not limited thereto, and the control unit 180 may acquire information on a size of a specific object from an omnidirectional image having a spherical shape.

Meanwhile, when the size of the specific object 4720 is smaller than a preset size, the control unit 180 may continuously display only the omnidirectional image 4710.

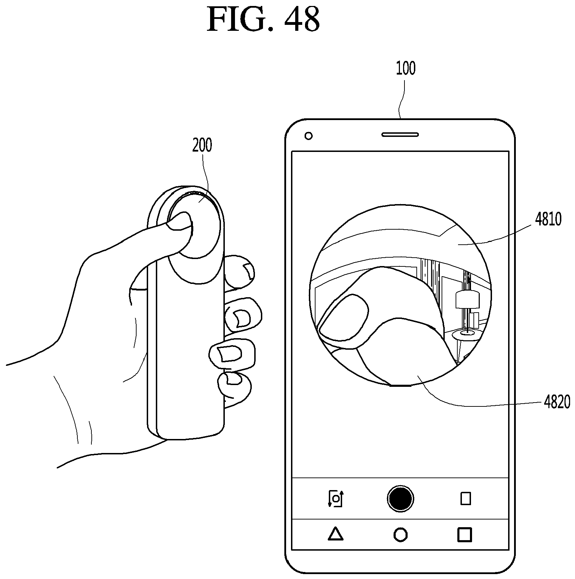

On the other hand, a user may slide a finger up in a lens direction as shown in FIG. 48.

In this case, the control unit 180 may display an omnidirectional image 4810 received from the omnidirectional capturing device 200 as a preview image.

In addition, the control unit 180 may acquire information on a size of a specific object included in an omnidirectionally captured image.

For example, the control unit 180 may acquire information on a size of a specific object 4820 included in the omnidirectional image 4810 to be displayed.

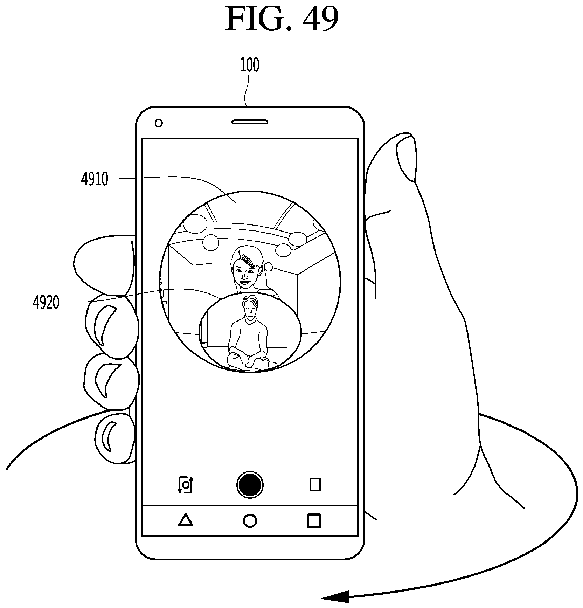

Meanwhile, when the size of the specific object 4820 is greater than a preset size, as shown in FIG. 49, the control unit 180 may display a normal image 4920 received through a camera unit 121 as a preview image. The normal image 4920 may be displayed together with the omnidirectional image 4810.

A user may search for a normal image to be captured by the user by moving or rotating the mobile terminal 100.

When the mobile terminal 100 is moved, the camera unit 121 may receives a new image, and the control unit 180 may display the new image received through the camera unit 121 as a preview image.

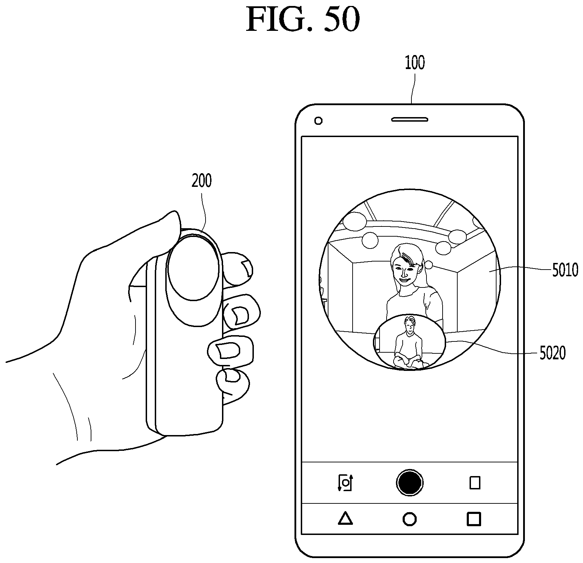

On the other hand, the user may slide the finger slid up in the lens direction down again as shown in FIG. 50.

In this case, the control unit 180 may display an omnidirectional image 5010 received from the omnidirectional capturing device 200 as a preview image.

In addition, the control unit 180 may acquire information on a size of a specific object included in an omnidirectionally captured image.

Furthermore, when the size of the specific object is smaller than a preset size, as shown in FIG. 50, the control unit 180 may display a reduced normal image 5020.

According to the present disclosure as described above, it is possible to display an omnidirectional image received from the omnidirectional capturing device 200 and a normal image received through the camera unit 121 together. That is, the present disclosure may provide a preview image of the omnidirectional capturing device 200 and a preview image of the camera unit 121 t the same time.

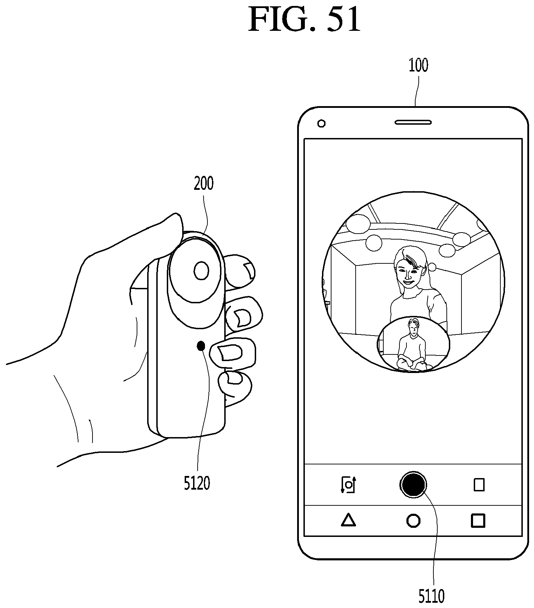

FIG. 51 is a diagram illustrating a method of capturing an omnidirectional image and a normal image together, according to an embodiment of the present disclosure.

A user may capture the omnidirectional image and the normal image together by selecting a capturing button 5110 displayed in the mobile terminal 100.

That is, the control unit 180 may receive an input for capturing. Specifically, in order for the omnidirectional capturing device 200 and the mobile terminal 100 to perform capturing at the same time, the control unit 180 may receive an input of selecting the capturing button 5110.

On the other hand, when the control unit 180 receives the input for the capturing, the control unit 180 may transmit a capturing command to the omnidirectional capturing device 200. In addition, when the control unit 180 receives the input for the capturing, the control unit 180 may control a camera unit 121 to capture a normal image. Meanwhile, when the capturing command is received, the omnidirectional capturing device 200 may capture an omnidirectional image.

On the other hand, the control unit 180 may perform control to concurrently capture a normal image and an omnidirectional image by transmitting the capturing command and a synchronization signal to the omnidirectional capturing device 200.

Meanwhile, the input for the capturing has been described to be received in the mobile terminal 100, but the present disclosure is not limited thereto.

Specifically, the user may capture the omnidirectional image and the normal image together by selecting a button 2120 of the omnidirectional capturing device 200.

That is, the omnidirectional capturing device 200 may receive the input for the capturing.

On the other hand, when the input for capturing is received, the omnidirectional capturing device 200 may transmit a capturing command to the mobile terminal 100. In addition, when the input for capturing is received, the omnidirectional capturing device 200 may capture an omnidirectional image. Meanwhile, when the capturing command is received, the control unit 180 of the mobile terminal 100 may capture a normal image.

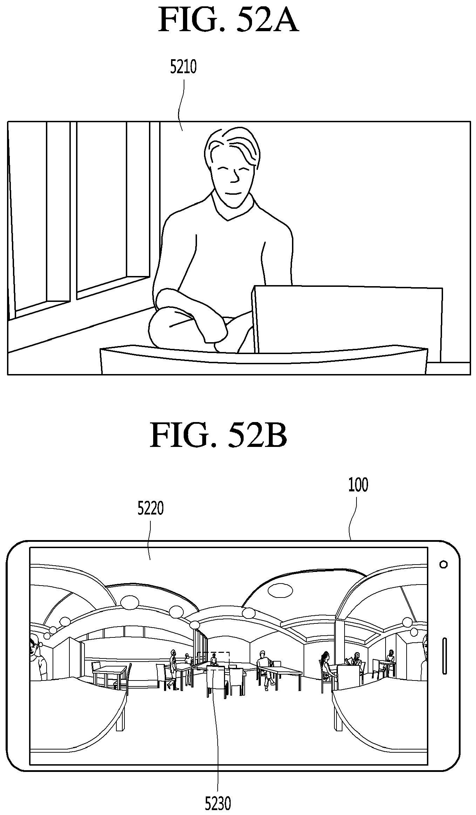

FIGS. 52A and 52B are diagrams illustrating a captured omnidirectional image and a captured normal image according to an exemplary embodiment of the present disclosure.

The control unit 180 may store a normal image (first image) 5210 captured based on a capturing command in a storage unit 170.

In addition, the control unit 180 may receive an omnidirectional image 5220 captured based on the capturing command by an omnidirectional capturing device 200 therefrom and store the received omnidirectional image 5220 in the storage unit 170.

Meanwhile, the control unit 180 may match and store the normal image 5210 and the omnidirectional image 5220 captured based on the same capturing command.

On the other hand, the control unit 180 may display the omnidirectional image 5220. Meanwhile, when the omnidirectional image 5220 is displayed, the control unit 180 may display the omnidirectional image 5220 such that a region 5230 corresponding to the captured first image 5210 is placed at a center of a whole region in the omnidirectional image 5220.

For example, when a first user is included in an omnidirectional image and the first user is included in a center of a normal image concurrently captured with the omnidirectional image, the control unit 180 may display the omnidirectional image such that the region including the user is placed at a center of a whole region in the omnidirectional image.

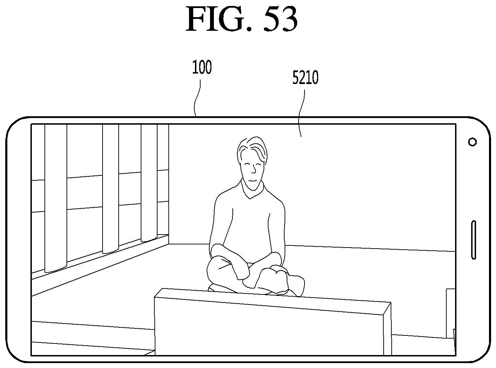

FIG. 53 is a diagram illustrating an image displayed when an omnidirectional image is enlarged, according to an embodiment of the present disclosure.

Referring to FIG. 52B again, the control unit 180 may receive an input of enlarging the displayed omnidirectional image 5220. In addition, when the displayed omnidirectional image 5220 is enlarged to a preset ratio or more, as shown in FIG. 53, the control unit 180 may display the captured normal image 5210. The preset ratio may be a maximum ratio capable of enlarging and displaying the omnidirectional image 5220.

An omnidirectional image and a normal image each have an advantage. Specifically, the omnidirectional image may have a wide angle and the normal image may not be distorted and may be implemented at high resolution.

Therefore, according to the present disclosure, it is possible to implement a displaying method capable of bringing out the advantage of each of the omnidirectional image and the normal image by implementing a concurrent capturing environment and a concurrent displaying environment for the omnidirectional image and the normal image.

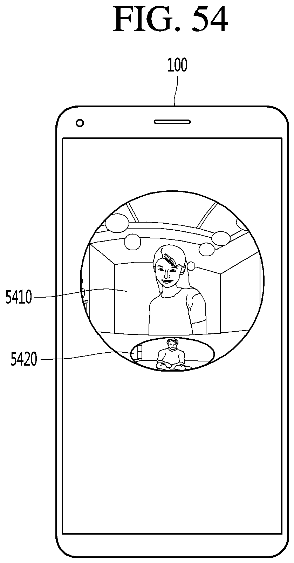

FIGS. 54 to 56 are diagrams illustrating a method of displaying an omnidirectional image and a normal image together, according to an embodiment of the present disclosure.

The control unit 180 may display an omnidirectional image.

In addition, the control unit 180 may display a normal image captured together with the omnidirectional image. Specifically, when the omnidirectional image is displayed, the control unit 180 may display the omnidirectional image and the normal image in a display region of a specific object, the normal image matching the omnidirectional image and being stored.

For example, as shown in FIG. 54, when an omnidirectional image 5410 is displayed in an omnidirectional display mode, the control unit 180 may display the omnidirectional image 5410 and a normal image 5420 in a display region of a specific object, the normal image 5420 matching the omnidirectional image 5410 and being stored.

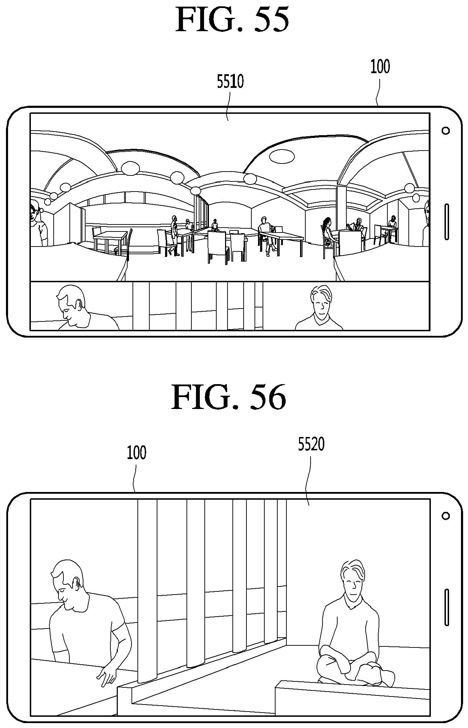

In another example, as shown in FIG. 55, when an omnidirectional image 5510 is displayed in the omnidirectional display mode, the control unit 180 may display the omnidirectional image 5510 and a normal image in a display region of a specific object, the normal image matching the omnidirectional image 5510 and being stored.

Meanwhile, the normal image displayed in the display region of the specific object may be a partial image of the normal image.

On the other hand, when an input of selecting the partial image of the normal image, as shown in FIG. 56, the control unit 180 may display a whole image 5520 of the normal image.

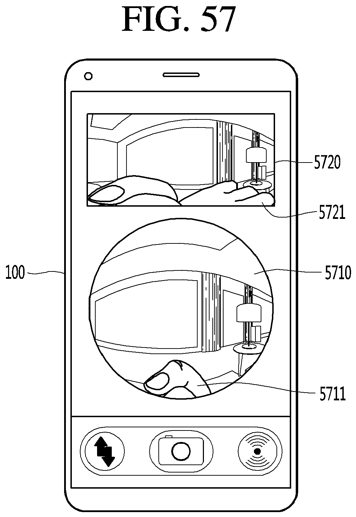

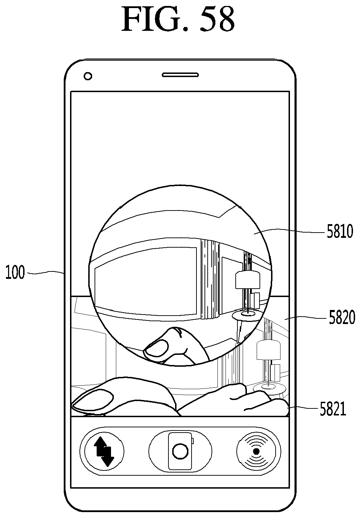

FIGS. 57 and 58 are diagrams illustrating a method of displaying a preview image of an omnidirectional display mode and a preview image of a normal display mode at the same time, according to an embodiment of the present disclosure.

Referring to FIG. 57, the control unit 180 may receive an omnidirectional image from the omnidirectional capturing device 200. In addition, the control unit 180 may display an image 5710 of the omnidirectional display mode and an image 5720 of the normal display mode by using the received omnidirectional image.

Meanwhile, the image 5710 of the omnidirectional display mode may include a specific object 5711 and the image 5720 of the normal display mode may also include a specific object 5721.

Referring to FIG. 58, the control unit 180 may receive an omnidirectional image from the omnidirectional capturing device 200. In addition, the control unit 180 may display an image 5810 of the omnidirectional display mode and an image 5820 of the normal display mode by using the received omnidirectional image.

On the other hand, the image 5820 of the normal display mode may be displayed so as to overlap the image 5810 of the omnidirectional display mode.

The image 5810 of the omnidirectional display mode may include a specific object 5811 and the image 5820 of the normal display mode may also include a specific object 5821.

On the other hand, a display region of the specific object 5821 in the image 5820 of the display mode may be displayed with a color, and a region of the image 5820 in the display mode except for the display region of the specific object 5821 may be displayed with a black and white color.

As described above, a specific object may be differently displayed in the omnidirectional display mode and the normal display mode.

When a preview image is provided only in the omnidirectional display mode, a case where a user does not know how a specific object is displayed in a plane image may be generated.

Therefore, according to the present invention, it is possible for the user capturing a picture to confirm an image of the omnidirectional display mode and an image of the normal display mode, and then, adjust a position of a hand by displaying the image of the omnidirectional display mode and the image of a normal display mode together.

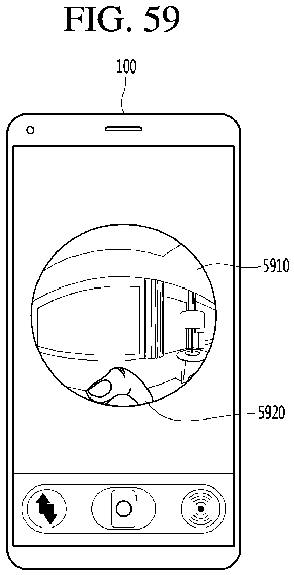

FIGS. 59 to 61 are diagrams illustrating a method of outputting a warning when there are many specific images, according to an embodiment of the present disclosure.

The control unit 180 may receive an omnidirectional image from the omnidirectional capturing device 200.

On the other hand, referring to FIG. 59, the control unit 180 may also acquire information on a size of a specific object included in an omnidirectionally captured image.

For example, the control unit 180 may acquire information on a size of a specific object 5920 included in an omnidirectional image 5910 to be displayed. The present disclosure is not limited thereto, and the control unit 180 may acquire information on a size of a specific object from an omnidirectional image having a spherical shape.

Meanwhile, when the size of the specific object 5920 is smaller than a preset size, the control unit 180 may not output a notification.

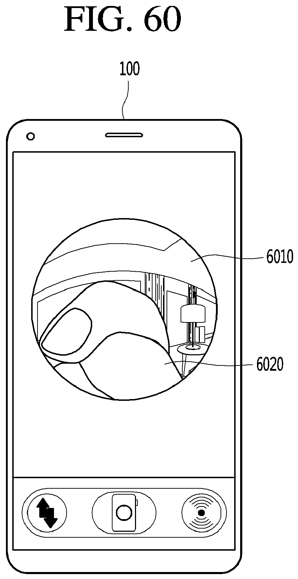

On the other hand, referring to FIG. 60, the control unit 180 may also acquire information on a size of a specific object included in an omnidirectionally captured image 6010.

For example, the control unit 180 may acquire information on a size of a specific object 6020 included in the omnidirectional image 6010 to be displayed.

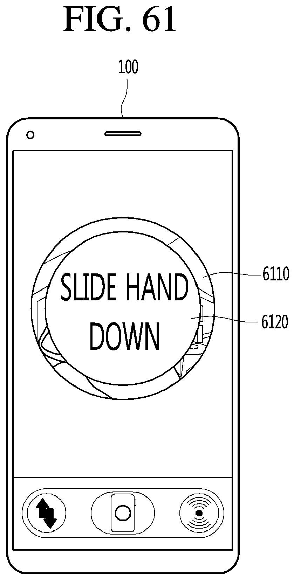

Meanwhile, when the size of the specific object 6020 is greater than a preset size, as shown in FIG. 61, the control unit 180 may display a notification 6120 indicating that the size of the specific object 6020 is greater than or equal to the preset size.

On the other hand, the case where a visual notification is output in the aforementioned embodiment has been described, but the present disclosure is not limited thereto.

For example, when the size of the specific object 6020 is greater than the preset size, the control unit 180 may display an alarm indicating that the size of the specific object 6020 is greater than or equal to the preset size.

In another example, when the size of the specific object 6020 is greater than the preset size, the control unit 180 may display a vibrations signal indicating that the size of the specific object 6020 is greater than or equal to the preset size.

Meanwhile, the case where the alarm indicating that the size of the specific object 6020 is greater than or equal to the preset size is output from a mobile terminal has been described, but the present disclosure is not limited thereto. For example, the alarm indicating that the size of the specific object 6020 is greater than or equal to the preset size may be output from the omnidirectional capturing device 200.

This will be described in detail with reference to FIG. 61.

FIG. 61 is a diagram illustrating a method of outputting a warning when there are many specific images, according to another embodiment of the present disclosure.

For example, when a size of a specific object is greater than or equal to a preset size, the control unit 180 may transmit a notification output command to an omnidirectional capturing device 200.

When the notification output command is received, the omnidirectional capturing device 200 may output light indicating that the size of the specific object is greater than or equal to the preset size, through a light output unit.

In another example, when the notification output command is received, the omnidirectional capturing device 200 may output a vibration signal indicating that the size of the specific object is greater than or equal to the preset size.

In another example, when the notification output command is received, the omnidirectional capturing device 200 may output an alarm indicating that the size of the specific object is greater than or equal to the preset size.

On the other hand, the control unit 180 is generally a component that manages the control of the apparatus and may also be referred to as a central processing unit, a microprocessor, a processor, and the like.

The present invention mentioned in the foregoing description may be implemented using a machine-readable medium having instructions stored thereon for execution by a processor to perform various methods presented herein. Examples of possible machine-readable mediums include HDD (Hard Disk Drive), SSD (Solid State Disk), SDD (Silicon Disk Drive), ROM, RAM, CD-ROM, a magnetic tape, a floppy disk, an optical data storage device, the other types of storage mediums presented herein, and combinations thereof. If desired, the machine-readable medium may be realized in the form of a carrier wave (for example, a transmission over the Internet). The processor may include the control unit 180 of the mobile terminal.

The foregoing embodiments are merely exemplary and are not to be considered as limiting the present disclosure. This description is intended to be illustrative, and not to limit the scope of the claims. Many alternatives, modifications, and variations will be apparent to those skilled in the art. The features, structures, methods, and other characteristics of the exemplary embodiments described herein may be combined in various ways to obtain additional and/or alternative exemplary embodiments.

As the present features may be embodied in several forms without departing from the characteristics thereof, it should also be understood that the above-described embodiments are not limited by any of the details of the foregoing description, unless otherwise specified, but rather should be considered broadly within its scope as defined in the appended claims, and therefore all changes and modifications that fall within the metes and bounds of the claims, or equivalents of such metes and bounds, are therefore intended to be embraced by the appended claims.

## Claims

1. A display apparatus comprising:
a display unit (151) configured to display an image; and
a control unit (180) configured to acquire (S5510) information on a size of a display region of a specific object included in an omnidirectional image (300) and display (S530) a first image in the display region based on the size of the display region if the omnidirectional image (300) is displayed,
wherein information included in the first image is changed based on at least one of the size of the display region and a display mode of the omnidirectional image (300).

2. The display apparatus of claim 1, wherein the specific object is a hand (411) of a user photographing the omnidirectional image (300).

3. The display apparatus of claim 1 or 2, wherein the information included in the first image comprises at least one of a thumbnail image and text.

4. The display apparatus of any preceding claim, wherein the first image comprises one or more icons respectively corresponding to one or more applications, and
if an input of selecting a first icon of the one or more icons is received, the control unit (180) is configured to execute a first application corresponding to the first icon and display an execution screen of the first application, which comprises information related to the omnidirectional image (300).

5. The display apparatus of any one of claims 1 to 4, wherein the control unit (180) is configured to display the first image if a ratio of the display region is greater than a preset ratio, wherein
the ratio of the display region is a ratio of the area of the display region to the area of the displayed omnidirectional image (300).

6. The display apparatus of claim 5, wherein the displayed omnidirectional image (300) is displayed in an omnidirectional display mode or a normal display mode,
a ratio of the display region in the omnidirectional display mode is different from a ratio of the display region in the normal display mode, and
the preset ratio in the omnidirectional display mode is the same as the preset ratio in the normal display mode.

7. The display apparatus of claim 6, wherein the control unit (180) is configured to not display the first image if the omnidirectional image (300) is displayed in the omnidirectional display mode and the ratio of the display region is less than the preset ratio, and
the control unit (180) is configured to display the first image if the omnidirectional image (300) is displayed in the normal display mode and the ratio of the display region is greater than the preset ratio.

8. The display apparatus of any one of claims 1 to 4, wherein the control unit (180) is configured to display the first image, including a plurality of pieces of information in the display region, having a first size if the omnidirectional image (300) is displayed in the normal display mode, and
the control unit (180) is configured to display the first image, including a portion of the plurality of pieces of information in the display region, having a second size smaller than the first size if the omnidirectional image (300) is displayed in the omnidirectional display mode.

9. The display apparatus of any one of claims 1 to 4, wherein the control unit (180) is configured to display the first image, including a plurality of pieces of information in the display region, if the size of the display region is greater than a preset size, and
the control unit (180) is configured to display the first image, including a portion of the plurality of pieces of information in the display region, if the size of the display region is smaller than the preset size.

10. The display apparatus of claim 9, wherein the control unit (180) is configured to display an image including the plurality of pieces of information if an input of selecting the first image including a portion of the plurality of pieces of information is received in a state in which the first image including a portion of the plurality of pieces of information is displayed.

11. The display apparatus of any one of claims 1 to 4, wherein the control unit (180) is configured to display the first image including a whole of a second image in the display region if the size of the display region is greater than a preset size, and
the control unit (180) is configured to display the first image including a portion of the second image in the display region if a size of the specific object is smaller than the preset size.

12. The display apparatus of any one of claims 1 to 4, wherein the control unit (180) is configured to display the first image including a first number of pieces of information in the display region if the size of the display region is smaller than a preset size, and
the control unit (180) is configured to display the first image including a second number of pieces of information in the display region if the size of the display region is greater than the preset size, wherein the second number is greater than the first number.

13. The display apparatus of any one of claims 1 to 4, wherein the control unit (180) is configured to display the first image including information having a first size in the display region if the size of the display region is smaller than a preset size; and
the control unit (180) is configured to display the first image including information having a second size in the display region if the size of the display region is greater than the preset size, wherein the second size is greater than the first size.

14. The display apparatus of claim 5, wherein the displayed omnidirectional image (300) is displayed in an omnidirectional display mode or a normal display mode, and
the preset ratio in the omnidirectional display mode is different from the preset ratio in the normal display mode.

15. The display apparatus of claim 14, wherein the control unit (180) is configured to display the first image if the omnidirectional image (300) is displayed in the omnidirectional display mode and the ratio of the display region is greater than a first preset ratio,
the control unit (180) is configured to display the first image if the omnidirectional image (300) is displayed in the normal display mode and the ratio of the display region is greater than a second preset ratio,
the first preset ratio is a preset ratio in the omnidirectional display mode, and
the second present ratio is a preset ratio in the normal display mode.
